(19) Europäisches Patentamt
European Patent Office
Office européen des brevets

(11) Veröffentlichungsnummer: **0 099 011**
**B1**

(12) **EUROPÄISCHE PATENTSCHRIFT**

(45) Veröffentlichungstag der Patentschrift: **14.05.86**

(51) Int. Cl.⁴: **C 08 G 18/62,** C 09 D 3/72, C 09 D 3/80, C 08 G 18/79, C 08 G 18/80, C 08 F 220/28

(21) Anmeldenummer: **83106185.8**

(22) Anmeldetag: **24.06.83**

(54) **Verfahren zur Herstellung von Überzügen.**

(30) Priorität: **13.07.82 DE 3226131**

(43) Veröffentlichungstag der Anmeldung: **25.01.84 Patentblatt 84/4**

(45) Bekanntmachung des Hinweises auf die Patenterteilung: **14.05.86 Patentblatt 86/20**

(84) Benannte Vertragsstaaten: **AT BE CH DE FR GB IT LI NL SE**

(56) Entgegenhaltungen:
**EP - A - 0 009 694**
**EP - A - 0 039 797**
**EP - A - 0 075 206**
**FR - A - 2 193 862**
**FR - A - 2 295 048**

(73) Patentinhaber: **BASF Aktiengesellschaft, Carl-Bosch-Strasse 38, D-6700 Ludwigshafen (DE)**

(72) Erfinder: **Lenz, Werner, Dr., Heinrich-Baermann-Strasse 14, D-6702 Bad Deurkheim (DE)**
Erfinder: **Sander, Hans, Dr., Petersstrasse 2, D-6700 Ludwigshafen (DE)**
Erfinder: **Moeller, Dieter, Berentrup 5, D-4715 Ascheberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft ein Verfahren zur Herstellung von Überzügen unter Verwendung von Beschichtungsmitteln, welche als Bindemittel Umsetzungsprodukte von ausgewählten Polyhydroxypolyacrylatharzen mit Isocyanuratgruppen aufweisenden, gegebenenfalls teilweise oder vollständig mit CH-, NH- oder OH-aciden Blockierungsmitteln verkappten Polyisocyanaten einer Funktionalität zwischen 2,5 und 6, mit vorwiegend cycloaliphatisch gebundenen Isocyanatgruppen enthalten.

In der DE-OS 1 720 265 ist ein Verfahren zur Herstellung von lichtbeständigen Überzügen auf der Basis von Umsetzungsprodukten von Polyhydroxypolyacrylatharzen, hergestellt durch Copolymerisation von Monoestern der Acrylsäure und/oder Methacrylsäure mit polyfunktionellen aliphatischen Alkoholen, Estern der Acrylsäure und/oder Methacrylsäure mit monofunktionellen aliphatischen Alkoholen und/ oder anderen copolymerisierbaren olefinisch ungesättigten Monomeren in organischer Lösung beschrieben. Die hier angegebenen Bindemittelkombinationen aus hydroxylgruppenhaltigen Acrylatharzen mit biuretisiertem Triisocyanat ergeben hochglänzende, bei niedrigen Temperaturen rasch kratzfest aushärtende, elastische pigmentierte Lackfilme hervorragender Witterungsstabilität. Ein Nachteil dieser Lackmischungen ist allerdings die Tatsache, dass die eingesetzten biuretisierten Triisocyanate aufgrund ihrer Tendenz zur Rückspaltung in die zugrundeliegenden monomeren Diisocyanate und darüber hinaus ihrer ausgeprägten Inhalationstoxizität in Form von Sprühnebeln gewerbehygienisch nicht unbedenklich sind.

Aus der DE-AS 1 669 008 ist die Verwendung eines Gemisches aus einem hydroxylgruppenhaltigen Copolymerisat auf der Basis von Methylmethacrylat, Vinylaromaten, Monoacrylaten und/oder -methacrylaten von Alkanolen, anderen copolymerisierbaren olefinisch ungesättigten Monomeren, Monomeren mit mindestens einer Hydroxylgruppe im Molekül und eines tertiäre Aminogruppen enthaltenden Monomeren und wenigstens einem Polyisocyanat in organischer Lösung als Lack bekannt. Diese Lackmischungen ergeben harte, kratzfeste, schlagzähe, witterungsstabile, gut haftende, gegen Wasser, Lösungsmittel und Chemikalien beständige Filme von hohem Glanz. Als Härter werden hier u.a. urethan-, isocyanurat- und biuretgruppenhaltige aromatische oder aliphatische Polyisocyanate aufgeführt. Es findet sich jedoch kein Hinweis auf isocyanurathaltige, gewerbehygienisch weitgehend unbedenkliche Polyisocyanate mit vorwiegend cycloaliphatisch gebundenen Isocyanatgruppen. Als tertiäre Aminogruppen enthaltende Monomere werden solche mit aliphatischen tertiären Aminogruppen hoher Basizität erwähnt. Hierdurch wird zwar die Reaktion zwischen Polyisocyanat und Polyol beschleunigt, andererseits ist aber eine relativ geringe Säurebeständigkeit und eine starke Vergilbungsneigung der Lackfilme bei Bewitterung zu erwarten.

In den DE-AS 1 668 510, DE-OS 2 460 329, DE-AS 2 054 239, DE-AS 2 603 259, DE-AS 2 626 900, DE-AS 2 659 853 und DE-OS 2 851 613 sind ebenfalls Verfahren zur Herstellung von in organischer Lösung vorliegenden hydroxylgruppenhaltigen Copolymerisaten und zur Herstellung von Überzügen aus Bindemitteln auf Basis dieser Copolymerisate in Kombination mit aliphatischen biuretisierten Triisocyanaten beschrieben. Für die genannten Copolymerisate kommen als hydroxylgruppenhaltige Acrylatmonomere Umsetzungsprodukte von Acrylsäure und/oder Methacrylsäure mit dem Glycidylester einer verzweigten aliphatischen Carbonsäure mit 4 bis 26 C-Atomen und gegebenfalls Hydroxyalkylacrylate oder -methacrylate mit 2 bis 4 C-Atomen in der Alkylkette, als Comonomere Acrylsäure- und/oder Methacrylsäureester von Alkanolen mit 1 bis 12 C-Atomen und Styrol oder Alkylstyrol zum Einsatz. Die Einführung der seitenständigen Hydroxylgruppen über den Glycidylester erfolgt hierbei durch Einpolymerisieren von Acrylsäure und/oder Methacrylsäure und gleichzeitiger Veresterung der Carboxylgruppen mit der Glycidylverbindung.

Aus diesen Bindemittelkombinationen lassen sich ebenfalls hochglänzende, rasch härtende, kratzfeste, wasserfeste und elastische Lackfilme hoher Witterungsstabilität herstellen. Nachteilig ist aber wiederum die Tatsache, dass auch hierfür die obengenannten gewerbehygienisch nicht völlig unbedenklichen biuretisierten Triisocyanate verwendet werden.

In der DE-OS 2 836 612 wird ein Verfahren zur Herstellung von Überzügen auf Basis von Bindemitteln aus biuret-, urethan- oder Isocyanuratgruppenhaltigen Lackpolyisocyanaten und hydroxylgruppenhaltigen Acrylatcopolymerisaten aus Hydroxyalkylacrylaten oder -methacrylaten mit 2 bis 4 C-Atomen im Hydroxyalkylrest, gegebenenfalls substituiertem Styrol und/oder Methylmethacrylat, Acrylsäure- und/ oder Methacrylsäureester mit 1 bis 12 C-Atomen im Alkoholrest, gegebenenfalls α,β-monoolefinisch ungesättigter Mono- oder Dicarbonsäure und Acryl- und/oder Methacrylnitril beschrieben. Die Vorteile dieses Verfahrens liegen vor allem darin, dass diese Bindemittelkombinationen sowohl klare, gut verträgliche Lackmischungen als auch glänzende, schnell trocknende, harte und ausreichend elastische Lackfilme ergeben, wobei die Realisierung dieser vorteilhaften anwendungstechnischen Eigenschaften, speziell der guten Verträglichkeit mit Isocyanuratgruppen enthaltenden Polyisocyanaten, zwingend die Verwendung von 5 bis 30 Gew.-% Acrylnitril und/ oder Methacrylnitril als Comonomere im hydroxylgruppenhaltigen Acrylatharz erfordert. Der Einsatz solcher nitrilgruppenhaltiger Copolymerisate in Polyurethan-Zweikomponenten-Lacken führt jedoch bei länger andauernder thermischer Belastung zu deutlicher Vergilbung und bei Bewitterung zur Kreidung der pigmentierten Lackfilme. In der Beschreibung ist auch erwähnt, dass als eines der bevorzugtem Lackpolyisocyanate u.a. ein Isocyanuratgruppen aufweisendes Polyisocyanat auf Basis von IPDI, d.h. mit vorwiegend cycloaliphatisch gebundenen Isocyanatgruppen, in Kombination mit den Acrylatharzen eingesetzt werden kann. Derartige Bindemittelkombinationen sind aber weder in den Beispielen beschrieben, noch finden sich in der Beschreibung der DE-OS 2 836 612 irgendwelche Hinweise auf die Elastizität, den Härteanstieg in Abhängigkeit von

der Zeit, sowie insbesondere die für den Einsatz in der Automobilreparaturlackierung äusserst wichtige Superbenzinfestigkeit der Lackfilme nach einer bestimmten Härtungsdauer.

Der DE-OS 2 900 592 sind Umsetzungsprodukte aus Glycidylgruppen enthaltenden Acrylatharzen und hydroxylgruppenhaltigen sekundären Monoaminen zu entnehmen, wobei die Acrylatharze aus Glycidylacrylat und/oder -methacrylat, Vinylaromaten, Methylmethacrylat, Acrylnitril, Methacrylnitril, Acrylsäureestern mit 1 bis 12 und/oder Methacrylsäureestern mit 2 bis 12 C-Atomen im Alkoholrest, gegebenenfalls Hydroxyalkylacrylaten und/oder -methacrylaten mit 2 bis 4 C-Atomen im Hydroxyalkylrest und gegebenenfalls α,β-monoolefinisch ungesättigten Mono- und/oder Dicarbonsäuren statistisch copolymerisiert sind und als Vernetzungskomponenten in Kombination mit Polyisocyanaten, die auch Isocyanuratgruppen aufweisen können, verwendet werden. Die in dieser Anmeldung beanspruchte Acrylatharzkomponente beinhaltet also als funktionelle Gruppen ausser vorwiegend sekundären Hydroxylgruppen zwingend tertiäre Aminogruppen. Neben der guten Verträglichkeit dieser Bindemittelkombinationen mit aromatischen Lösungsmitteln werden vor allem die trotz der anwesenden tertiären Aminogruppen überraschend hohen Standzeiten hervorgehoben. Wie für den Fachmann leicht einzusehen, sind diese hohen Standzeiten der Lackmischungen vor allem darauf zurückzuführen, dass die Acrylatharze fast ausschliesslich sekundäre Hydroxylfunktionen als reaktive Gruppen enthalten. Daher ist es auch keineswegs überraschend, dass das im Vergleichsbeispiel beschriebene entsprechende Umsetzungsprodukt auf Basis von Diethanolamin, welches primäre Hydroxylgruppen enthält, gegenüber den in dieser DE-OS beschriebenen Copolymerisaten mit Polyisocyanaten zu geringe Topfzeiten ergibt. Nach dem hier beschriebenen Verfahren ist es also nicht möglich, für Zweikomponenten-Polyurethanlacke gut brauchbare Acrylatharze, die grössere Mengen primärer Hydroxylgruppen neben tertiären Aminogruppen enthalten, zu erhalten. Darüberhinaus besitzen Bindemittel, die stark basische aminogruppenhaltige Copolymerisate aufweisen, die Nachteile einer geringeren — z.B. für Automobilreparaturdecklacke aber dringend erforderlichen — Säurebeständigkeit, sowie starker Vergilbung bei längerer Bewitterung im Vergleich zu aminogruppenfreien Systemen.

Die DE-OS 3 010 719 betrifft ein Verfahren zur Herstellung von Metalleffektlackierungen verbesserter Witterungsstabilität unter Verwendung von Klarlacken als Decklacke, deren Bindemittel im wesentlichen als Polyolkomponente zwingend aromatenarme Polyesterole und gegebenenfalls Polyacrylatpolyole, als Polyisocyanatkomponente biuret- und/oder isocyanuratgruppenhaltige Addukte mit aliphatischen, gegebenenfalls blockierten Isocyanatgruppen enthalten. Die hierin beschriebenen Klarlacke zeichnen sich speziell durch hohe Rissbeständigkeit bei Bewitterung aus. Es ist allgemein bekannt, dass solche in dieser DE-OS u.a. beschriebenen Polyacrylat-Polyester-Gemische bezüglich der Verträglichkeit beider Komponenten problematisch sind, was auch aus Anspruch 3 dieser DE-OS hervorgeht, wonach das Polyacrylat als stabile Dispersion von Polymerteilchen in einer Lösung des Polyesterpolyols vorliegen soll. Desgleichen ist der Beschreibung zu entnehmen, dass solche Mischungen bzw. Dispersionen vorzugsweise dann einzusetzen sind, wenn die Lackhärtung unter Hitzeeinwirkung erfolgt, da bei diesen Bedingungen homogene, klare Lackfilme erhalten werden (vgl. Beispiel 6; Einbrenntemperatur: 80 °C). Besonders gut für den Automobilreparatursektor geeignete Lacke müssen aber auch problemlos bei Raumtemperatur härtbar sein und in diesem Fall homogene Beschichtungen ergeben. Ein weiterer allgemeiner Nachteil der in dieser Anmeldung beschriebenen Kombinationen aus aromatenarmen Polyesterpolyolen und Polyisocyanaten ist die relativ langsame Antrocknung und Durchtrocknung solcher Systeme bei Raumtemperatur im Vergleich zu den rasch superbenzinfest trocknenden Polyacrylatpolyol / Polyisocyanat-Kombinationen. Die in den Beispielen der DE-OS 3 010 719 angeführten Lackmischungen werden demnach sämtlich nur bei 80 °C, d.h. bei erhöhter Temperatur, ausgehärtet.

Die DE-OS 3 027 776 bezieht sich auf ein Verfahren zur Herstellung hydroxylgruppenhaltiger, mit ε-Caprolacton modifizierter und mit Polyisocyanaten vernetzbarer (Meth)acrylatharze. Diese Copolymerisate ergeben auch in Kombination mit isocyanuratgruppenhaltigem Polyisocyanat auf Basis von Isophorondiisocyanat — mit vorwiegend cycloaliphatisch gebundenen Isocyanatgruppen — harte, witterungsstabile, gut auf Metall haftende, elastische, wasser- und chemikalienbeständige Überzüge. Die hier beschriebenen Systeme haben allerdings den Nachteil, dass sie im Falle der Verwendung cycloaliphatischer Polyisocyanate bei hohen Temperaturen (zwischen 110 und 150 °C) eingebrannt werden müssen, d.h. für die Automobilreparaturlackierung nicht in Frage kommen. Die DE-OS 3 137 133 betrifft ein Verfahren zur Herstellung von Überzügen durch Umsetzung von Polyhydroxypoly(meth)acrylatharzen, die aus Hydroxyalkyl(meth)acrylaten mit primären Hydroxylgruppen sowie 4 bis 10 C-Atomen in der Alkylenhauptkette und speziellen Acrylsäure- bzw. Methacrylsäureestern als Comonomere hergestellt werden, mit Isocyanatgruppen aufweisenden Polyisocyanaten mit vorwiegend cycloaliphatisch gebundenen Isocyanatgruppen. Die aus den genannten Komponenten erhaltenen Lacke besitzen aufgrund der Verwendung der speziellen Polyisocyanate eine sehr geringe Inhalationstoxizität und ergeben für die Automobilreparaturdecklackierung gut geeignete, bei niedrigen Temperaturen härtende, nicht vergilbende, säurebeständige Überzüge gleichzeitig hoher Elastizität, Kratzfestigkeit, Endhärte und Witterungsstabilität. Die Härtungsgeschwindigkeit dieser Lackfilme bei Raumtemperatur sowie ihre Superbenzinbeständigkeit genügen zwar den Anforderungen der Praxis, erreichen aber teilweise nicht ganz den Standard der günstigsten Bindemittelsysteme des Standes der Technik etwa auf Basis von hydroxylgruppenhaltigen Polyacrylatharzen und Biuretgruppen aufweisenden aliphatischen Polyisocyanaten.

Im Gegensatz zu den bisher vorzugsweise in Automobilreparaturdecklacken eingesetzten biuretisierten aliphatischen Polyisocyanaten zeigen isocyanuratgruppenhaltige Polyisocyanate mit vorwiegend cycloaliphatisch gebundenen Isocyanatgruppen, vorzugsweise durch Trimerisierung von 3-Isocyanatomethyl-3,5,5-trimethyl-cyclohexylisocyanat gemäss der GB-PS 1 391 066, DE-OS 2 325 826 und 2 732 662 hergestellte Produkte, auch in Form von Aerosolen, nur eine äusserst geringe Inhalationstoxizität, was für die Verwendung bei der Automobilreparaturlackierung von grossem Vorteil ist. Glechzeitig werden in Kombination mit geeigneten Polyolen Lackfilme hoher Witterungsstabilität und Vergilbungsresistenz erhalten.

Werden die dem Stand der Technik entsprechenden hydroxylgruppenhaltigen Polyacrylatharze, wie sie etwa in den oben genannten Anmeldungen DE-AS 1 669 008, DE-AS 1 668 510, DE-OS 2 460 329, DE-AS 2 054 239, 2 603 259, 2 626 900, 2 659 853 und DE-OS 2 851 613 beschrieben sind, d.h. auf Basis von Hydroxyalkylacrylaten und/oder -methacrylaten mit 2 bis 3 C-Atomen in der Hauptkette des Alkoholrestes, gegebenenfalls kombiniert mit Addukten von Glycidylestern einer verzweigten aliphatischen Monocarbonsäure an Acrylsäure und/oder Methacrylsäure, mit diesen Isocyanatgruppen enthaltenden cycloaliphatischen Polyisocyanaten kombiniert, so erhält man hieraus bei allen für Automobilreparaturlackierungen üblichen Härtungstemperaturen zwischen Raumtemperatur und 80°C Lackfilme mit unzureichenden mechanischen Eigenschaften und teilweise nicht ausreichender Superbenzinfestigkeit innerhalb praxisüblicher Härtungsdauern. Bei Verwendung von Acrylatharzen mit hohen Hydroxylzahlen (> 100) und vorwiegend aus Monomeren, die Homopolymerisate hoher Glasübergangstemperatur (> 20°C) ergeben, erhält man bei praxisüblichen Härtungsbedingungen (etwa 7 d/Raumtemperatur oder maximal 30 bis 60 min/80°C) zwar Lackfilme ausreichender Kratzfestigkeit und in einigen Fällen genügender Benzinfestigkeit, die andererseits aber viel zu spröde sind, d.h. also den Praxisanforderungen nicht genügen. Der Einsatz von Acrylatharzen niedrigerer Hydroxylzahlen (< 100) mit hohen Anteilen an Monomerbausteinen, die Homopolymerisate niedriger Glasübergangstemperatur (< 5°C) ergeben, führt entsprechend zu Lackfilmen zwar ausreichender Flexibilität, aber für die Praxis zu geringer Kratzfestigkeit und Superbenzinfestigkeit. Verwendung grösserer Katalysatormengen ergibt zwar zum Teil Filme sowohl verbesserter Flexibilität als auch Kratzfestigkeit, die aber noch nicht genügend rasch benzinfest aushärten. Darüberhinaus zeigen die entsprechenden Lackmischungen zu kurze Topfzeiten.

Zweikomponentenlacke aus den in der DE-OS 1 720 265 beschriebenen Polyhydroxypolyacrylatharzen und isocyanurathaltigen cycloaliphatischen Polyisocyanaten führen ähnlich wie die obengenannten Kombinationen zu Filmen nicht ausreichender Elastizität. Bei Kombination der in der DE-OS 2 836 612 beschriebenen Polyhydroxypolyacrylate, die zwingend Nitrilseitengruppen enthalten, mit Isocyanuratgruppen und vorwiegend cycloaliphatisch gebundene Isocyanatgruppen aufweisenden Polyisocyanaten erhält man, wie oben erwähnt, für Automobilreparaturdecklacke nicht brauchbare Lackschichten zu starker Vergilbungstendenz und nicht ausreichender Witterungsstabilität. Die in der DE-OS 2 900 592 beanspruchten, gleichzeitig zwingend Hydroxyl- und tertiäre Aminogruppen aufweisenden Acrylatharze zeigen in Kombination mit diesen Polyisocyanaten, wie oben erwähnt vor allem Probleme bezüglich ausreichender Säurestabilität der Lackfilme.

Die den DE-OSen 3 010 719 und 3 027 776 zu entnehmenden Kombinationen aus Polyesterpolyolen, hydroxylgruppenhaltigen Acrylatharzen bzw. mit ε-Caprolacton modifizierten hydroxylgruppenhaltigen Poly(meth)acrylaten einerseits und cycloaliphatischen Polyisocyanaten andererseits sind, wie oben erwähnt, für den Einsatz in Automobilreparaturdecklacken vor allem aufgrund der erforderlichen relativ hohen Einbrenntemperaturen und der langsamen Antrocknung wenig geeignet.

Die in der DE-OS 3 137 133 beschriebenen Bindemittel aus speziellen hydroxylgruppenhaltigen Polyacrylaten und Isocyanuratgruppen aufweisenden Polyisocyanaten mit vorwiegend cycloaliphatisch gebundenen Isocyanatgruppen sind an sich gut geeignet für die Verwendung auf dem Automobilreparatursektor; doch wäre eine höhere Härtungsgeschwindigkeit der Lackfilme bei Raumtemperatur und gleichzeitig eine verbesserte Superbenzinbeständigkeit wünschenswert.

Aufgabe der vorliegenden Erfindung war es daher, ein neues Verfahren zur Herstellung von Überzügen zur Verfügung zu stellen, bei welchem Bindemittel auf Basis isocyanuratgruppenhaltiger Polyisocyanate einer Funktionalität zwischen 2, 5 und 6, bevorzugt 3 und 5, mit vorwiegend cycloaliphatisch gebundenen Isocyanatgruppen und Hydroxylgruppen aufweisende Polyacrylatharze in organischer Lösung zum Einsatz kommen, welche nicht die genannten technischen Nachteile besitzen: d.h. ausgehend von Lackmischungen genügend langer Topfzeit, bei niedrigen Temperaturen ohne Katalysatorzugabe rasch superbenzinfest härtende, nicht vergilbende Filme gleichzeitig hoher Flexibilität, Kratzfestigkeit und Witterungsstabilität bzw. Kreidungsbeständigkeit ergeben.

Unter Funktionalität im Sinne der vorliegenden Erfindung wird die durchschnittliche Zahl der reaktionsfähigen, gegebenenfalls verkappten Isocyanatgruppen pro Polyisocyanatmolekül verstanden.

Überraschenderweise liess sich die Aufgabe der Erfindung dadurch lösen, dass Überzüge auf Basis von gegebenenfalls teilweise oder vollständig verkappte, bevorzugt unverkappte, Isocyanuratgruppen enthaltenden Polyisocyanaten einer Funktionalität zwischen 2,5 und 6, bevorzugt 3 bis 5, mit vorwiegend cycloaliphatisch gebundenen Isocyanatgruppen durch Umsetzung mit hydroxylgruppenhaltigen Polyacrylaten spezieller Zusammensetzung hergestellt werden.

Gegenstand der vorliegenden Erfindung ist ein Verfahren zur Herstellung von Überzügen auf der Basis von Umsetzungsprodukten von

(A) Polyhydroxypolyacrylatharzen aus Estern der Acrylsäure und/oder Methacrylsäure mit monofunktionellen aliphatischen Alkoholen, Monoestern der Acrylsäure und/oder Methacrylsäure

mit polyfunktionellen aliphatischen Alkoholen und anderen copolymerisierbaren olefinisch ungesättigten Monomeren mit

(B) gegebenenfalls teilweise oder vollständig mit CH-, NH- oder OH-aciden Blockierungsmitteln verkappten, Isocyanuratgruppen aufweisenden Polyisocyanaten einer Funktionalität zwischen 2,5 und 6,

das dadurch gekennzeichnet ist, dass man als Polyhydroxypolyacrylatharze (A) hydroxylgruppenhaltige Copolymerisate aus

a) 6 bis 70 Gew.-% mindestens eines Esters der allgemeinen Formel

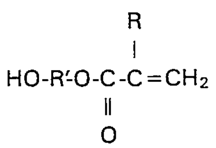

wobei
R für Wasserstoff oder eine Methylgruppe,
R' für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen, und die Gruppierungen HO-R'- gegebenenfalls teilweise oder vollständig durch die Gruppierung Z-O-R'- ersetzt sein kann, worin Z für einen Rest der allgemeinen Formel

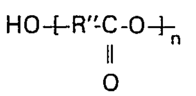

steht, worin n für eine ganze Zahl von 1 bis 3 steht und R'' eine 4 bis 8 Kohlenstoffatome enthaltende Alkylenkette bedeutet, welche gegebenenfalls zusätzlich 1 bis 3 Alkylsubstituenten mit insgesamt nicht mehr als 10 Kohlenstoffatomen und/oder einen cycloaliphatischen Rest mit 6 bis 10 Kohlenstoffatomen und/oder einen, gegebenenfalls alkylsubstituierten, aromatischen Rest mit 6 bis 8 Kohlenstoffatomen und/oder einen araliphatischen Rest mit 7 bis 9 Kohlenstoffatomen und/oder einen 1 bis 8 Kohlenstoffatome enthaltenden Alkoxyrest aufweist,

b) 0 bis 40, bzw. 0 bis 50 Gew.-% eines oder mehrerer Hydroxyalkylester der Acrylsäure und/oder Methacrylsäure der allgemeinen Formel

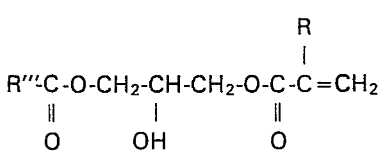

wobei
R für Wasserstoff oder eine Methylgruppe,
R''' für den Alkylrest einer verzweigten aliphatischen Carbonsäure mit 4 bis 26 C-Atomen stehen,

c) 10 bis 50 Gew.-% mindestens eines Alkylesters der Acrylsäure und/oder Methacrylsäure, der Homopolymerisate mit Glasübergangstemperaturen von +5°C bis +120°C bildet,

d) 0 bis 10 Gew.-% eines Vinylaromaten,

e) 10 bis 60 Gew.-% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von —80°C bis +4,5°C bildet,

f) 0 bis 10 Gew.-% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

g) 1 bis 25 Gew.-% mindestens einer polymerisierbaren, olefinisch ungesättigten, heterocyclischen Verbindung der allgemeinen Formeln (I) bis (VIII)

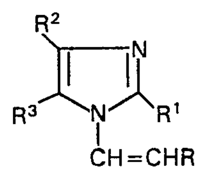

(I)

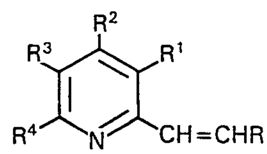

(II)

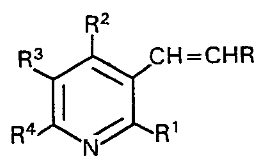

(III)

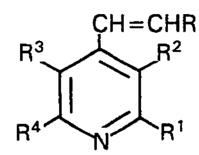

(IV)

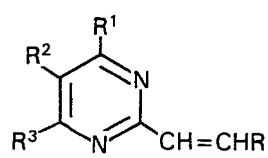

(V)

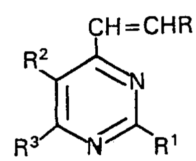

(VI)

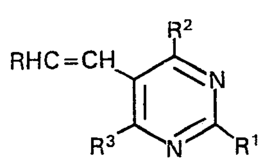

(VII)

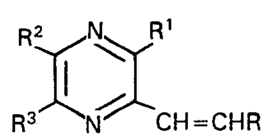

(VIII)

wobei
R für Wasserstoff oder eine Methylgruppe steht,
$R^1$, $R^2$, $R^3$ und $R^4$ untereinander oder verschieden sind und jeweils für Wasserstoff, eine Methyl- oder Ethylgruppe, einen gerad- oder verzweigtkettigen Alkylrest mit 3 bis 4 C-Atomen, einen

gegebenenfalls durch eine Alkylgruppe mit 1 bis 4 C-Atomen, durch Halogen oder eine Nitrogruppe substituierten Phenylrest, eine Gruppe der allgemeinen Formel $-R^I-A-R^{II}$

worin

A Sauerstoff oder Schwefel
$R^I$ eine Methylen-, Ethylen- oder gegebenenfalls durch eine Alkylgruppe mit 1 bis 4 C-Atomen, durch Halogen oder eine Nitrogruppe substituierte Phenylengruppe und
$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten,

eine Halogen- oder Nitrogruppe, sowie eine Gruppe der allgemeinen Formeln $-OR^{III}$, $-COOR^{III}$, $-SO_2R^{III}$, $-CONR^{III}R^{IV}$ oder $-SO_2NR^{III}R^{IV}$,

worin

$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen

und ausserdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,

h) 0 bis 20 Gew.-% unter (a) bis (g) nicht genannter Monomerer, deren einpolymerisierte Reste gegenüber Isocyanatgruppen inert sind,

mit der Massgabe, dass die Summe der unter (a) und (b) genannten Prozentzahlen 6 bis 70, die Summe der unter (c), (d) und (g) genannten Prozentzahlen 11 bis 60 und die Summe der Prozentzahlen der unter (a) bis (h) genannten Komponenten 100 beträgt,

und als Isocyanuratgruppen aufweisende Polyisocyanate (B) einer Funktionalität zwischen 2,5 und 6 solche mit vorwiegend cycloaliphatisch gebundenen Isocyanatgruppen einsetzt.

Bevorzugt verwendet man als cycloalipatisches isocyanurathaltiges Polyisocyanat (B) ein aus 3-Isocyanatomethyl-3,5,5-trimethyl-cyclohexylisocyanat als monomerem Diisocyanat erhaltenes Produkt, sowie als hydroxylgruppenhaltige Copolymerisate (A) solche mit Hydroxylzahlen zwischen 30 und 250, vorzugsweise zwischen 50 und 150. Bevorzugt wählt man ausserdem die Mengenverhältnisse der Reaktionskomponenten (A) und (B) des Beschichtungssystem so, dass das Äquivalentverhältnis von gegebenenfalls teilweise oder vollständig mit CH-, NH- oder OH-aciden Blockierungsmitteln verkappten Isocyanatgruppen zu reaktionsfähigen Hydroxylgruppen zwischen 0,25 : 1 und 4 : 1 liegt.

Zu den für das erfindungsgemässe Verfahren zu verwendenden Umsetzungsprodukten und deren Aufbaukomponenten ist im einzelnen folgendes auszuführen:

(A) Als Polyhydroxypolyacrylatharze (A) kommen hydroxylgruppenhaltige Copolymerisate aus:

a) 6 bis 70 Gew.-% mindestens eines Esters der allgemeinen Formel

```
             R
             |
HO-R'-O-C-C=CH2
         ||
         O
```

wobei
R für Wasserstoff oder eine Methylgruppe,
R' für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen, und die Gruppierung HO-R'- gegebenenfalls teilweise oder vollständig durch die Gruppierung Z-O-R'- ersetzt sein kann, worin Z für einen Rest der allgemeinen Formel

```
HO-[-R''-C-O-]n
         ||
         O
```

steht, worin n für eine ganze Zahl von 1 bis 3 steht, und R'' eine 4 bis 8 Kohlenstoffatome enthaltende Alkylenkette bedeutet, welche gegebenenfalls zusätzlich 1 bis 3 Alkylsubstituenten mit insgesamt nicht mehr als 10 Kohlenstoffatomen und/oder einen cycloaliphatischen Rest mit 6 bis 10 Kohlenstoffatomen und/oder einen, gegebenenfalls alkylsubstituierten, aromatischen Rest mit 6 bis 8 Kohlenstoffatomen und/oder einen araliphatischen Rest mit 7 bis 9 Kohlenstoffatomen und/oder einen 1 bis 8 Kohlenstoffatomen enthaltenden Alkoxyrest aufweist,

b) 0 bis 40 Gew.-%, bzw. 0 bis 50 Gew.-% eines oder mehrerer Hydroxyalkylester der Acrylsäure und/oder Methacrylsäure der allgemeinen Formel

```
                                  R
                                  |
R'''-C-O-CH2-CH-CH2-O-C-C=CH2
     ||        |        ||
     O        OH        O
```

wobei
R für Wasserstoff oder eine Methylgruppe,
R''' für den Alkylrest einer verzweigten aliphatischen Carbonsäure mit 4 bis 26 C-Atomen stehen

c) 10 bis 50 Gew.-% mindestens eines Alkylesters der Acrylsäure und/oder Methacrylsäure, der Homopolymerisate mit Glasübergangstemperaturen von +5°C bis +120°C bildet,

d) 0 bis 10 Gew.-% eines Vinylaromaten,

e) 10 bis 60 Gew.-% mindestens eines Alkylesters und/oder bis zu 2 Ethersauerstoffbrücken enthaltenden Alkylglykolesters der Acrylsäure und/ oder Methacrylsäure, der Homopolymerisate mit Glasübergangstemperaturen von —80°C bis +4,5°C bildet,

f) 0 bis 10 Gew.-% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

g) 1 bis 25 Gew.-% mindestens einer polymerisierbaren, olefinisch ungesättigten, heterocyclischen Verbindung der allgemeinen Formeln (I) bis (VIII)

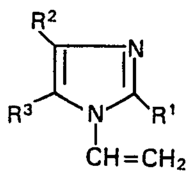

(Ia)

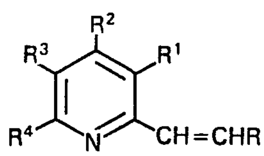

(II)

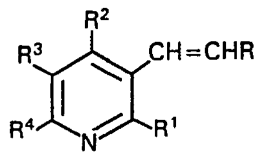

(III)

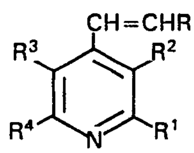

(IV)

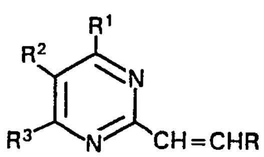

(V)

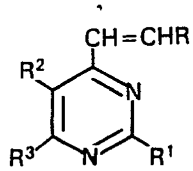

(VI)

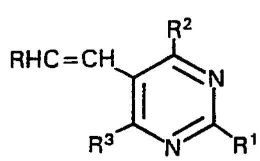

(VII)

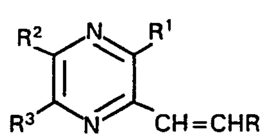

(VIII)

wobei

R für Wasserstoff oder eine Methylgruppe steht,

$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, durch Halogen oder eine Nitrogruppe substituierten Phenylrest, eine Gruppe der allgemeinen Formel $-R^{I}-A-R^{II}-$

worin

A Sauerstoff oder Schwefel

$R^{I}$ eine Methylen-, Ethylen- oder gegebenenfalls durch eine Alkylgruppe mit 1 bis 4 C-Atomen, durch Halogen oder eine Nitrogruppe substituierte Phenylengruppe und

$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten,

eine Halogen- oder Nitrogruppe, sowie eine Gruppe der allgemeinen Formeln $-OR^{III}$, $-COOR^{III}$, $-SO_2R^{III}$, $-CONR^{III}R^{IV}$ oder $-SO_2NR^{III}R^{IV}$,

worin

$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen

und ausserdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,

h) 0 bis 20 Gew.-% unter (a) bis (g) nicht genannter Monomerer, deren einpolymerisierte Reste gegenüber Isocyanatgruppen inert sind,

mit der Massgabe, dass die Summe der unter (a) und (b) genannten Prozentzahlen 6 bis 70, die Summe der unter (c), (d) und (g) genannten Prozentzahlen 11 bis 60 und die Summe der Prozentzahlen der unter (a) bis (h) genannten Komponenten 100 beträgt, in Frage.

(a) Als Ester der allgemeinen Formel

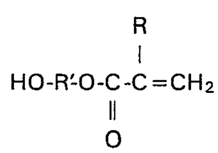

wobei R für Wasserstoff oder eine Methylgruppe, R' für einen gerad- oder verzweigtkettigen Alkylenrest mit 2 bis 18 C-Atomen bzw. 2 bis 10 C-Atomen in der Hauptkette oder einen bis zu drei cycloaliphatische Gruppen enthaltenden Alkylenrest mit 7 bis 17 C-Atomen stehen, und die Gruppierung HO-R'- gegebenenfalls teilweise oder vollständig durch die Gruppierung Z-O-R'- ersetzt sein kann, worin Z für einen Rest der allgemeinen Formel

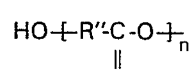

steht, worin n für eine ganze Zahl von 1 bis 3 steht, und R'' eine 4 bis 8 Kohlenstoffatome enthaltende Alkylenkette bedeutet, welche gegebenenfalls zusätzlich 1 bis 3 Alkylsubstituenten mit insgesamt nicht

mehr als 10 Kohlenstoffatomen und/oder einen cycloaliphatischen Rest mit 6 bis 10 Kohlenstoffatomen und/oder einen, gegebenenfalls alkylsubstituierten, aromatischen Rest mit 6 bis 8 Kohlenstoffatomen und/oder einen araliphatischen Rest mit 7 bis 9 Kohlenstoffatomen und/oder einen 1 bis 8 Kohlenstoffatome enthaltenden Alkoxyrest aufweist,

eignen sich beispielsweise Monoester zweiwertiger Alkohole, wie Decandiol-1,10, Octandiol-1,8, Pentandiol-1,5, 1,4-Dihydroxymethylcyclohexan, 3(4),-8(9)-Dihydroxymethyltricyclo[5.2.1.$0^{2,6}$]-decan, 2,2--Dimethylpropandiol-1,3, Butandiol-1,4, Hexandiol-1,6, Propandiol-1,2 oder Ethandiol-1,2 mit Acrylsäure oder Methacrylsäure z.B. Decandiol-1,10-monoacrylat, Decandiol-1,10-monomethacrylat, Octandiol-1,8--monoacrylat, Octandiol-1,8-monomethacrylat, Pentandiol-1,5-monoacrylat, Pentandiol-1,5-monomethacrylat, 1,4-Dihydroxymethylcyclohexanmonoacrylat, 1,4-Dihydroxymethylcyclohexanmonomethacrylat, 3(4),8(9)-Dihydroxymethyltricyclo[5.2.1.$0^{2,6}$]decanmonoacrylat und -monomethacrylat, 2,2-Dimethylpropandiol-1,3-monoacrylat und -monomethacrylat, Butandiol-1,4-monomethacrylat, Hexandiol--1,6-monomethacrylat, 2-Hydroxypropylacrylat, 2-Hydroxypropylmethacrylat sowie vorzugsweise Hydroxyethylacrylat, Hydroxyethylmethacrylat, Butandiol-1,4-monoacrylat oder -monomethacrylat und Hexandiol-1,6-monoacrylat oder -monomethacrylat.

Ausserdem können Produkte verwendet werden, welche durch Umsetzung der oben genannten Hydroxylgruppen aufweisenden Acrylsäure- bzw. Methacrylsäureester mit gegebenenfalls substituierten Lactonen mit 4 bis 8 C-Atomen im Ring im Molverhältnis 1,5 : 1 bis 1 : 3 zu erhalten sind. Als hierfür einzusetzende Lactone sind beispielsweise zu nennen:

δ-Valerolacton, γ,γ-Dimethylvalerolacton, ε-Caprolacton, α-, β-, γ-, δ-, ε-Methyl-ε-caprolacton, die entsprechenden Monoethyl-, -propyl-, -isopropyl- und -octyl-ε-caprolactone, β,δ-Dimethyl-, γ,γ-Dimethyl-, β,δ,δ-Trimethyl-, β-Methyl-δ-ethyl-, γ-Cyclohexyl- und γ-Phenyl-ε-caprolacton, ζ-Önantholacton sowie η-Caprylolacton, wobei ε-Caprolacton besonders bevorzugt ist.

Bevorzugte Lactonaddukte sind die Reaktionsprodukte von Hydroxyethylacrylat und/oder -methacrylat und/oder 2-Hydroxypropylacrylat und/oder -methacrylat und/oder Butandiol-1,4- und/oder Hexandiol-1,6-monoacrylat und/oder -monomethacrylat mit ε-Caprolacton im Molverhältnis von 1,5 : 1 bis 1 : 3, wobei die Addukte auf Basis von Hydroxyethylacrylat und/oder -methacrylat, 2-Hydroxypropylacrylat und/oder -methacrylat sowie Butandiol-1,4-monoacrylat und/oder -monomethacrylat besonders bevorzugt sind. Selbstverständlich können als hydroxylgruppenhaltige Acrylate bzw. Methacrylate auch Gemische der genannten Lactonaddukte mit den oben angegebenen Hydroxylalkylacrylaten bzw. -methacrylaten in jedem beliebigen Mischungsverhältnis zwischen 1 : 99 und 99 : 1 eingesetzt werden. Die Herstellung der ungesättigten Lactonaddukte kann nach einem an sich bekannten Verfahren erfolgen, z.B. wie es in der DE-OS 3 027 776 beschrieben ist, etwa durch Umsetzung von hydroxylgruppenhaltigen Acrylsäure- bzw. Methacrylsäureestern mit ε-Caprolacton im Äquivalentverhältnis von 1,5 : 1 bis 1 : 3 bei Temperaturen zwischen 60 und 130°C in Anwesenheit von 0,01 bis 0,15 Gew.-% Organozinn-Katalysatoren wie z.B. Dibutylzinnoxid oder Dibutylzinndiacetat unter Durchleiten von Luft.

Komponente (a) ist im erfindungsgemäss zu verwendenden Copolymerisat (A) in einer Menge von 6 bis 70, vorzugsweise 6 bis 50 Gew.-% einpolymerisiert.

b) Als Hydroxyalkylester der Acrylsäure und/oder Methacrylsäure der allgemeinen Formel

$$R'''-\underset{\underset{O}{\|}}{C}-O-CH_2-\underset{\underset{OH}{|}}{CH}-CH_2-O-\underset{\underset{O}{\|}}{C}-\overset{\overset{R}{|}}{C}=CH_2$$

wobei R für Wasserstoff oder eine Methylgruppe und R''' für den Alkylrest einer verzweigten Carbonsäure mit 4 bis 26 C-Atomen stehen, eignen sich z.B. Trimethylessigsäureglycidylester(meth)acrylat, Versaticsäureglycidylesteracrylat und -methacrylat. Desgleichen eignen sich Gemische der genannten Hydroxylalkylmethacrylate und -acrylate.

Komponente (b) kann in einer Menge von 0 bis 50, bzw. von 0 bis 40, vorzugsweise 0 bis 25 Gew.-% im Polyhydroxypolyacrylatharz (A) einpolymerisiert sein. Die Summe der unter (a) und (b) genannten Prozentzahlen beträgt 6 bis 70, vorzugsweise 6 bis 50 Gew.-%.

(c) Als Alkylester der Acrylsäure und/oder Methacrylsäure, die Homopolymerisate mit Glasübergangstemperaturen von +5°C bis +120°C bilden, kommen z.B. in Frage Methylacrylat, Methylmethacrylat, Ethylmethacrylat, tert.-Butylacrylat, n-Butylmethacrylat und i-Butylmethacrylat oder deren Mischungen, wobei Methylmethacrylat und tert.-Butylacrylat bevorzugt sind.

Komponente (c) ist im erfindungsgemäss zu verwendenden Copolymerisat (A) in einer Menge von 10 bis 50, vorzugsweise 25 bis 50 Gew.-% einpolymerisiert.

(d) Als Vinylaromaten kommen beispielsweise Styrol, α-Methylstyrol, o- und p-Chlorstyrol, o-, m-, p-Methylstyrol und p-tert.-Butylstyrol oder deren Gemische in Betracht, wobei Styrol bevorzugt ist.

Die Vinylaromaten (d) können im Polyhydroxypolyacrylatharz (A) in Mengen von 0 bis 10, vorzugsweise 0 bis 7 Gew.-% einpolymerisiert sein.

Die Summe der unter (c) und (d) genannten Prozentzahlen beträgt im allgemeinen 10 bis 50, vorzugsweise 25 bis 50 Gew.-%.

(e) Als Alkylester und/oder bis zu 2 Ethersauerstoffbrücken enthaltende Alkylglykolester der Acrylsäure und/oder Methacrylsäure, die Homopolymerisate mit Glasübergangstemperaturen von —80 bis +4,5°C bilden, sind beispielsweise Ethylacrylat, n-Butylacrylat, i-Butylacrylat, 2-Ethylhexylacrylat, 2-Ethylhexylmethacrylat, Ethylglykolacrylat, Ethylglykolmethacrylat, Ethyldiglykolacrylat, Ethyldiglykolmethacrylat, Laurylacrylat und Laurylmethacrylat, oder deren Mischungen geeignet, wobei n-Butylacrylat und i-Butylacrylat bevorzugt sind.

Komponente (e) ist im erfindungsgemäss zu verwendenden Copolymerisat (A) in einer Menge von 10 bis 60, vorzugsweise 20 bis 50 Gew.-% einpolymerisiert.

(f) Als Amide der Acrylsäure und/oder Methacrylsäure, die am Amidstickstoff gegebenenfalls einen oder zwei Alkylreste mit 1 bis 8 Kohlenstoffatomen, welche gegebenenfalls eine Carbonylgruppe enthalten können, oder einen oder zwei Phenylreste als Substituenten tragen, kommen beispielsweise Acrylamid, Methacrylamid, N-Methacrylamid, N-Methylmethacrylamid, N-Ethylacrylamid, N-Isopropylacrylamid, N,N-Dimethylacrylamid, N,N-Diethylacrylamid, N,N-Diisopropylacrylamid, N-Phenylacrylamid, N,N-Di-n-butylacrylamid und N-(1,1-dimethyl-3-oxo-butyl)-acrylamid (= Diacetonacrylamid), vorzugsweise Acrylamid und Methacrylamid, in Betracht.

Komponente (f) kann im Polyhydroxypolyacrylatharz (A) in einer Menge von 0 bis 10, vorzugsweise 0 bis 5 Gew.-% einpolymerisiert sein.

(g) Als polymerisierbare, olefinisch ungesättigte, Heterocyclische Verbindungen der oben angegebenen allgemeinen Formeln (I) bis (VIII), wobei R für Wasserstoff oder eine Methylgruppe steht, $R^1$, $R^2$, $R^3$ und $R^4$ untereinander gleich oder verschieden sind und jeweils für Wasserstoff, eine Methyl- oder Ethylgruppe, einen gerad- od. verzweigtkettigen Alkylrest mit 3 bis 4 C-Atomen, einen gegebenenfalls durch eine Alkylgruppe mit 1 bis 4 C-Atomen, Halogen, wie z.B. Chlor oder Brom, oder eine Nitrogruppe substituierten Phenylrest, eine Gruppe der allgemeinen Formel $-R^I-A-R^{II}$, worin A Sauerstoff oder Schwefel, $R^I$ eine Methylen-, Ethylen- oder gegebenenfalls durch eine Alkylgruppe mit 1 bis 4 C-Atomen, durch Halogen oder eine Nitrogruppe substituierte Phenylengruppe und $R^{II}$ eine Methyl, Ethyl- oder gegebenenfalls durch eine Alk ylgruppe mit 1 bis 4 C-Atomen, durch Halogen- oder eine Nitrogruppe substituierte Phenylengruppe bedeuten, eine Halogen- oder Nitrogruppe, sowie eine Gruppe der allgemeinen Formeln $-OR^{III}$, $-COOR^{III}$, $-SO_2R^{III}$, $-CONR^{III}R^{IV}$ oder $-SO_2NR^{III}R^{IV}$, worin $R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen und ausserdem in den Formeln (I), (II), (III), (V), (VI) und (VIII) $R^2$ und $R^3$, oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, Halogen, wie z.B. Chlor oder Brom, oder eine Nitrogruppe substituierten aromatischen Sechsring bilden können, kommen z.B. N-Vinylimidazole wie 1-Vinyl-2-methylimidazol, 1-Vinyl-2-phenylimidazol, 1-Vinylbenzimidazol, 1-Vinyl-2-ethylimidazol, 1-Propenyl-2-methylimidazol, 1-Vinyl-4-methylimidazol, 1-Vinyl-2-ethyl-4-methylimidazol, 1-Vinyl-4-nitroimidazol, 1-Vinylimidazol und 1-Propenylimidazol oder deren Mischungen in Betracht, wobei 1-Vinylimidazol, 1-Vinyl-2-methylimidazol und 1-Vinyl-2-phenylimidazol bevorzugt sind. Darüberhinaus sind als olefinisch ungesättigte heterocyclische Verbindungen (g) Vinylheterocyclen der Formeln (II) bis (VIII) beispielsweise 2-Vinylpyridin, 3-Vinylpyridin, 4-Vinylpyridin, 5-Ethyl-2-vinylpyridin, 6-Methyl-3-vinylpyridin, 2-Vinylchinolin, 2-Vinylisochinolin, 4-Vinylchinolin, 2-Vinylchinoxalin, 4-Vinylchinazolin, 2-Vinylpyrimidin, 4-Vinylpyrimidin und 2-Vinylpyridazin oder deren Gemische geeignet, wobei 3-Vinylpyridin und 4-Vinylpyridin bevorzugt sind.

Komponente (g) ist im erfindungsgemäss zu verwendenden Copolymerisat (A) in einer Menge von 1 bis 25, vorzugsweise 2 bis 20 Gew.-% einpolymerisiert.

(h) Als unter (a) bis (g) nicht genannte Monomere, deren einpolymerisierte Reste gegenüber Isocyanatgruppen inert sind, die also unter den beim erfindungsgemässen Verfahren in Frage kommenden Umsetzungsbedingungen nicht mit Isocyanat- oder verkappten Isocyanatgruppierungen reagieren, seien beispielsweise genannt Vinylester mit 1 bis 12 Kohlenstoffatome enthaltenden Carbonsäuren, wie z.B. Vinylacetat, Vinylpropionat, Vinylpivalat, Vinyl-2-ethylhexanat, Vinyllaurat, Vinylbenzoat, Vinylhalogenide, wie z.B. Vinylchlorid, Vinylidenhalogenide, wie etwa Vinylidenchlorid, sowie N-Vinylpyrrolidon und N-Vinylcaprolactam und Gemische der genannten Monomeren.

Komponente (h) kann im Polyhydroxypolyacrylatharz in einer Menge von 0 bis 20, vorzugsweise 0 bis 10 Gew.-% einpolymerisiert sein.

Die Summe der unter (a) bis (h) genannten Prozentzahlen beträgt 100.

Das hydroxylgruppenhaltige Copolymerisat (A) weist im allgemeinen Hydroxylzahlen zwischen 30 und 250, vorzugsweise 50 bis 150 auf.

Das Polyhydroxypolyacrylatharz (A) lässt sich aus den Monomeren (a) bis (h) nach üblichen Polymerisationsverfahren, beispielsweise durch kontinuierliche oder diskontinuierliche radikalinitiierte Polymerisation, vorzugsweise diskontinuierlich in organischer Lösung bei Temperaturen zwischen 80 und 160°C, z.B. in Gegenwart radikalliefernder Polymerisationsinitiatoren herstellen. Für das erfindungsgemässe Verfahren werden die Polyhydroxypolyacrylatharze (A), die im allgemeinen mittlere Molekulargewichte ($M_n$) zwischen 1000 und 20.000 bzw. K-Werte (nach Fikentscher) zwischen 12 und 40, vorzugsweise zwischen 15 und 30 aufweisen, zweckmässigerweise in organischen, gegenüber Isocyanatgruppen inerten Lösungsmitteln gelöst eingesetzt. Derartige geeignete Lösungsmittel sind z.B. Ester, wie n-Butylacetat, Ethylacetat und Isopropylacetat, Ether, wie z.B. Tetrahydrofuran, Dioxan und Diethylglykol, Etherester, wie z.B. Ethylglykolacetat, Methylglykolacetat und Butylglykolacetat, Kohlenwasserstoffe, insbesondere aromatische Kohlenwasserstoffe, wie Xylol oder Toluol, Ethylbenzol und Halogenkohlenwasserstoffe, wie Chlorbenzol, sowie Gemische dieser Lösungsmittel.

(B) Als erfindungsgemäss zu verwendende, gegebenenfalls teilweise oder vollständig mit CH-, NH- oder OH-aciden Blockierungsmitteln verkappte, Isocyanuschen 3 und 5, eignen sich solche mit vorwiegend cycloaliphatisch gebundenen Isocyanatgruppen. Bevorzugt sind dabei derartige Isocyanuratgruppen enthaltende Polyisocyanate, die aus 3-Isocyanatomethyl-3,5,5-trimethylcyclohexylisocyanat (= Isophorondiisocyanat = IPDI) als monomerem Diisocyanat erhalten werden. Die Herstellung derartiger Isocyanuratgruppen enthaltender Polyisocyanate kann z.B. nach üblichen Methoden erfolgen, wie sie beispielsweise in den GB-PS 1 391 066, DE-OS 2 325 826 oder DE-OS 2 732 662 beschrieben sind, z.B. durch Trimerisierung des Diisocyanats bei Temperaturen zwischen ca. 40 und 120°C in Anwesenheit von Katalysatoren, wie etwa Metallverbindungen, z.B. Metallnaphthenaten, Erdalkaliacetaten, -formiaten und -carbonaten, Metallalkoxiden und Eisenacetylacetonat, bevorzugt sekundären und tertiären Aminen, wie Aziridinen in Kombination mit Trialkylaminen oder Triethylendiamin, kombiniert mit Propylenoxid.

Ebenfalls in Frage kommen Isocyanuratgruppen aufweisende Polyisocyanate auf Basis von 1,4-Diisocyanatocyclohexan (= Cyclohexan-1,4-diisocyanat) und 4,4'-Diisocyanatodicyclohexylmethan (= Dicyclohexylmethan-4,4'-diisocyanat).

Als für die Lackpolyisocyanate (B) zu verwendende Blockierungsmittel kommen in Frage:

CH-, NH- oder OH-acide Blockierungsmittel wie z.B. Malonsäuredialkylester, Acetessigsäuredialkylester, Acetylaceton, ε-Caprolactam, Pyrrolidon, Phenole, p-Hydroxybenzoesäureester, Cyclohexanol, t-Butanol, bevorzugt Oxime wie Benzophenonoxim, Cyclohexanonoxim, Methylethylketoxim, Dimethylketoxim, besonders bevorzugt sind dabei monofunktionelle Ketoxime, insbesondere Methylethylketoxim und Dimethylketoxim.

Komponente (B) kann unverkappt, teilweise oder vollständig verkappt sein. Bevorzugt sind unverkappte Polyisocyanate.

Die Mengenverhältnisse der erfindungsgemäss zu verwendenden beiden Bindemittelkomponenten Polyisocyanat (B) und Polyhydroxypolyacrylat (A) werden zweckmässigerweise so gewählt, dass das Äquivalentverhältnis von — gegebenenfalls verkappten — Isocyanatgruppen zu reaktionsfähigen Hydroxylgruppen zwischen 0,25 : 1 und 4 : 1, vorzugsweise zwischen 0,5 : 1 und 2 : 1, liegt.

Die Herstellung von Überzügen nach dem erfindungsgemässen Verfahren erfolgt durch Vermischen der Komponenten (A) und (B), zweckmässigerweise gelöst in organischem Lösungsmittel oder Lösungsmittelgemisch, gegebenenfalls Zusatz von Pigmenten, wie üblichen Weiss- und Schwarzpigmenten, etwa Titandioxiden (Rutil), Zinksulfiden und Russ oder Buntpigmenten, z.B. Cadmiumsulfid, Eisenoxidgelb, Eisenoxidrot, Chromoxid, Benzidingelb, Phthalocyaninblau, Phthalocyaningrün, Thioindigo und Chinacridonen, z.B. in Mengen von bis zu 250%, bezogen auf Gesamtmenge Bindemittel [= Komponenten (A) und (B)], sowie anderer für die Verarbeitung von 2-Komponentenlacken üblichen Hilfs- und Zusatzstoffen und Auftragen auf das zu überziehende Substrat. Prinzipiell können auch Katalysatoren, wie z.B. Metallverbindungen, etwa Blei-, Zink- und Kobaltnaphthenate, Blei-, Zinn- und Calciumoctoat, Dibutylzinndiacetat, Dibutylzinndilaurat, Eisenacetylacetonat und Basen wie Triethylendiamin und Diethylethanolamin in Mengen von ca. 0,001 bis 10 Gew.-%, bezogen auf die Gesamtbindemittelmenge, verwendet werden, jedoch erfolgt die Herstellung der Überzüge vorzugsweise ohne Katalysatorzugabe, da es, wie bereits erwähnt, ein überraschender Vorteil der erfindungsgemässen Lackmischungen ist, dass sie ohne Beschleuniger sehr rasch zu harten, kratzfesten und superbenzinfesten Schichten aushärten und dabei dennoch praxisgerechte Topfzeiten ergeben.

Als Auftragsmethoden kommen die üblichen in Betracht, beispielsweise Spritzen, Tauchen, Streichen oder Walzen.

Nach dem erfindungsgemässen Verfahren lassen sich beispielsweise Metallteile aus Aluminium, Zink, Zinn, Eisen und Stahl, wie Stahlbleche, oder verzinkte Stahlbleche und Aluminiumbleche, darüberhinaus auch andere Substrate wie etwa Holz, Papier, Beton und Kunststoffe, z.B. PVC und Polyamid beschichten.

Die Härtung der Überzüge kann nach dem Auftragen auf das Substrat in üblicher Weise erfolgen, beispielsweise bei Raumtemperatur innerhalb von 24 Stunden bis 7 Tagen, oder zweckmässigerweise nach Ablüften bei Raumtemperatur, bei Temperaturen von etwa 60 bis 80°C innerhalb von 20 bis 60 Minuten.

Nach dem erfindungsgemässen Verfahren lassen sich Überzüge mit besonders vorteilhaften Eigenschaften erhalten. Die erfindungsgemäss erhaltenen Überzüge zeichnen sich insbesondere durch hohe Kratzfestigkeit, ausgezeichnete Superbenzinfestigkeit nach relativ kurzen Trocknungszeiten, gleichzeitig hohe Elastizität, guten Glanz und hervorragende Witterungsstabilität bei rascher Härtung und relativ langen Topfzeiten der zugrundeliegenden Lackmischungen aus.

Die in den Beispielen und Vergleichsbeispielen genannten Teile und Prozente sind, soweit nicht anders angegeben, Gewichtsteile und Gewichtsprozente.

*Herstellung der Polyhydroxypolyacrylatharze*

Beispiele 1 bis 14 (erfindungsgemäss geeignete Polyhydroxypolyacrylatharze) und Vergleichsbeispiele I bis V sowie VII:

Die Herstellung der Polyacrylatharze erfolgt entsprechend dem Stand der Technik.

In einem mit Blattrührer, Rückflusskühler, Zulaufgefäss, Thermometer und Gaseinleitungsrohr versehenen Reaktionsgefäss werden 100 Teile n-Butylacetat/Xylol 1 : 1 auf jeweils die in Tabelle 1 oder 2 angegebene Temperatur erhitzt. Unter Einhalten dieser Temperatur und starkem Rühren werden die Lösungen der in den Tabellen 1 und 2 aufgeführten Comonomermischungen und des als Polymerisationsinitiator verwendeten Azodiisobuttersäurenitrils in n-Butylacetat/Xylol 1 : 1 mit konstanter Zulaufgeschwindigkeit unter Luftausschluss (im schwachen Stickstoffstrom) innerhalb eines Zeitraumes von 4 Stunden zugetropft. Anschliessend werden zur Nachpolymerisation noch 2,5 Teile Azodiisobuttersäurenitril in 75 Teilen n-Butylacetat/Xylol 1 : 1 im Verlauf von 2 Stunden gleichmässig zudosiert.

Bei den Vergleichsbeispielen I und II werden im Unterschied hierzu jeweils 100 Teile n-Butylacetat vorgelegt, und zur Nachpolymerisation wird eine Lösung von 5 Teilen Azodiisobuttersäurenitril in 100 Teilen n-Butylacetat eingesetzt.

*Vergleichsbeispiel VI*

In einem wie oben beschriebenen Reaktionsgefäss wird eine Mischung aus 100 Teilen Ethylglykolacetat, 200 Teilen Xylol und 149 Teilen Glycidylester von α,β-Dialkylalkanmonocarbonsäuren der Bruttoformel $C_{13}H_{24}O_3$ auf 135°C erhitzt. Anschliessend wird bei dieser Temperatur ein Gemisch aus 101 Teilen Methylmethacrylat, 94 Teilen Hydroxylmethacrylat, 111 Teilen Styrol, 44 Teilen Acrylsäure, 1,5 Teilen t-Do-decylmercaptan und 5 Teilen Di-tert.-Butylperoxid im Verlauf von 2 Stunden mit konstanter Zulaufgeschwindigkeit zugetropft und die Harzlösung noch 6 Stunden bei 135°C nachreagieren lassen. Die Polymerisatlösung mit einem Festkörpergehalt von 60% wird mit Xylol auf 50% Feststoffgehalt verdünnt und besitzt eine Auslaufzeit von 250 sec im DIN-Becher 4 bei 23°C. Weitere Kennzahlen: OH-Zahl (bez. auf fest): 150, Säurezahl 7, K-Wert: 23,9).

Tabelle 1

| Beispiel | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Butandiol-1,4--monoacrylat | (Teile) | 97,5 | 100 | 130 | 130 | 130 | | 65 | 65 | 65 | 130 | 130 | 130 | 160 | 38,5 |
| Hydroxyethylacrylat | » | | | | | | 103 | 51,5 | 51,5 | | | | | | |
| 2-Hydroxypropyl-acrylat | » | | | | | | | | | 58 | | | | | |
| Addukt aus Hydroxy-ethylacrylat und ε-Caprolacton (1 : 1)* | | | | | | | | | | | | | | | 143,5 |
| Methylmethacrylat | » | 50 | | 50 | 50 | | 50 | 50 | | 50 | 50 | 50 | 50 | 50 | 75 |
| t-Butylacrylat | » | 152,5 | 100 | 130 | 105 | 100 | 149,5 | 143,5 | 116 | 137 | 120 | 110 | 105 | 122,5 | 153 |
| n-Butylacrylat | » | 175 | 250 | 165 | 165 | 220 | 172,5 | 165 | 217,5 | 165 | 165 | 165 | 165 | 142,5 | 65 |
| 1-Vinylimidazol | » | 25 | 50 | 25 | 50 | 50 | 25 | 25 | 50 | 25 | | | | 25 | 25 |
| 1-Vinyl-2-methyl-imidazol | » | | | | | | | | | | 29 | | | | |
| 1-Vinyl-2-phenyl-imidazol | » | | | | | | | | | | | 45 | | | |
| 4-Vinylpyridin | » | | | | | | | | | | | | 50 | | |
| Azodiisobutter-säurenitril | » | 10 | 10 | 10 | 10 | 10 | 10 | 10 | 10 | 10 | 10 | 10 | 10 | 10 | 10 |
| n-Butylacetat | » | 62,5 | 62,5 | 62,5 | 62,5 | 62,5 | 62,5 | 62,5 | 62,5 | 62,5 | 62,5 | 62,5 | 62,5 | 62,5 | 62,5 |
| Xylol | » | 62,5 | 62,5 | 62,5 | 62,5 | 62,5 | 62,5 | 62,5 | 62,5 | 62,5 | 62,5 | 62,5 | 62,5 | 62,5 | 62,5 |
| Polymerisations-temperatur | (°C) | 100 | 100 | 100 | 100 | 90-95 | 100 | 100 | 100 | 100 | 100 | 100 | 100 | 100 | 100 |
| OH-Zahl (mg KOH/g fest) | | 75 | 80 | 100 | 100 | 100 | 100 | 100 | 100 | 100 | 100 | 100 | 100 | 125 | 100 |
| Viskosität b. 23°C (mPa.s) | | 1900 | 1700 | 2050 | 3800 | 5500 | 3650 | 2600 | 2200 | 2350 | 2350 | 2400 | 4500 | 2700 | 3900 |
| K-Wert(3%ig in Dimethylformamid) | | 21,6 | 19,5 | 20,3 | 22,2 | 23,1 | 22,3 | 21,3 | 20,7 | 21,1 | 21,2 | 21,4 | 23,0 | 21,7 | 22,9 |

*hergestellt aus 50,4 Teilen Hydroxyethylacrylat und
49,6 Teilen ε-Caprolacton

Tabelle 2

| Vergleichsbeispiel | | I zu Bsp. 3+4 | II zu Bsp. 3+4 | III zu Bsp. 3,4+6 | IV zu Bsp. 3,4+6 | V zu Bsp. 2 | VII zu Bsp. 14 |
|---|---|---|---|---|---|---|---|
| Hydroxyethylacrylat | (Teile) | 103 | | 103 | 103 | 83 | 31 |
| Hydroxyethylmethacrylat | » | | 117,5 | | | | |
| Addukt aus Hydroxyethylacrylat und ε-Caprolacton (1 : 1) | | | | | | | 143,5 |
| Methylmethacrylat | » | 50 | 50 | 50 | 50 | 50 | 100 |
| t-Butylacrylat | » | 152 | 152,5 | 149,5 | 144,5 | 117 | 153 |
| n-Butylacrylat | » | 192,5 | 177,5 | 172,5 | 172,5 | 250 | 72,5 |
| Acrylnitril | » | | | 25 | | | |
| N-Vinylpyrrolidon | » | | | | 30 | | |
| Dimethylaminoethylmethacrylat | » | | | | | 50 | |
| Acrylsäure | » | 2,5 | 2,5 | | | | |
| Azodiisobuttersäurenitril | » | 10 | 10 | 10 | 10 | 10 | 10 |
| n-Butylacetat | » | 133 | 133 | 62,5 | 62,5 | 62,5 | 62,5 |
| Xylol | » | | | 62,5 | 62,5 | 62,5 | 62,5 |
| Polymerisationstemperatur | (°C) | 100 | 110 | 100 | 100 | 90 | 100 |
| OH-Zahl (mg KOH/g fest) | | 100 | 100 | 100 | 100 | 80 | 100 |
| Viskosität b. 23°C (mPa.s) | | 3400 | 3000 | 1850 | 1750 | 1300 | 3500 |
| K-Wert(3%ig in Dimethylformamid) | | 23,2 | 21,1 | 20,8 | 19,7 | 20,1 | 22,7 |

1. *Prüfung unpigmentierter Zweikomponenten-Reaktionslacke*

Die in den Beispielen 1 bis 14 und den Vergleichsbeispielen I bis VII beschriebenen Polyacrylatharze wurden mit isocyanuratgruppenhaltigem Polyisocyanat auf Basis von Isophorondiisocyanat (IPDI) kombiniert.

Dazu wurden jeweils 500 Teile der Copolymerisatlösung mit Festkörpergehalten von 62 bis 63% für die Beispiele 1 bis 14 und Vergleichsbeispiele III bis V sowie VII, von ca. 60% für die Vergleichsbeispiele I und II und ca. 50% für Vergleichsbeispiel VI mit der stöchiometrischen Menge (OH/NCO = 1 : 1, vgl. Tabelle 3) einer 70%igen Lösung des Polyisocyanats in Ethylglykolacetat/Xylol 1 : 1 (NCO-Gehalt ca. 12%) gründlich vermischt und anschliessend mit n-Butylacetat auf Spritzviskosität (Auslaufzeit 20 sec, DIN-Becher 4 bei 23°C) verdünnt. Bei den Vergleichsbeispielen I, II, III, IV, VI und VII wurde zusätzlich noch je eine Formulierung unter Katalysatorzugabe (30 Teile 1%ige Lösung von Dibutylzinndilaurat in n-Butylacetat, entsprechend 0,07% fest/fest, und 46 Teile 4%ige Lösung von Calciumoctoat in n-Butylacetat, entsprechend 0,43% fest/fest) hergestellt. Die Mischungen wurden anschliessend auf Stahlbleche mit einer Trockenschichtdicke von 40 bis 50 µm aufgespritzt. Die Härtung der Lackschichten erfolgte entweder 1 Tag und 7 Tage bei Raumtemperatur oder nach 30 Minuten Ablüften bei Raumtemperatur sowohl 30 Minuten als auch 60 Minuten bei 80°C im Umluftofen. Für die Härtung von 7 Tagen bei Raumtemperatur und 60 Minuten bei 80°C wurden jeweils die Pendelhärte nach König, die Kratzfestigkeit und Erichsentiefung, für die Härtung von 1 Tag bei Raumtemperatur die Pendelhärte nach König und für 30 Minuten bei 80°C die Pendelhärte und die Erichsentiefung geprüft. Die Prüfergebnisse sind in Tabelle 3 zusammengefasst.

Tabelle 3

| Beispiel/ Vergleichs-beispiel Nr. | Menge Polyiso-cyanat 70%ig (Teile) | katalysiert ja/nein | Eigenschaften der Klarlackfilme | | | | | | | | | |
|---|---|---|---|---|---|---|---|---|---|---|---|---|
| | | | Härtung bei Raumtemperatur | | | | Härtung bei 80°C | | | | | |
| | | | 1 Tag | 7 Tage | | | 30 min | | | 60 min | | |
| | | | PH (sec) | PH (sec) | KF | ET (mm) | PH (sec) | KF | ET (mm) | PH (sec) | KF | ET (mm) |
| 1 | 146 | nein | 106 | 160 | 1 | 8,1 | 145 | 1-2 | 9,1 | 180 | 1 | 7,2 |
| 2 | 156 | nein | 110 | 155 | 0 | 9,1 | 160 | 0 | 9,7 | 170 | 0 | 9,4 |
| 3 | 195 | nein | 130 | 165 | 0 | 9,2 | 183 | 0 | 8,6 | 189 | 0 | 8,3 |
| 4 | 195 | nein | 132 | 175 | 0 | 7,7 | 185 | 0 | 7,3 | 193 | 0 | 7,1 |
| 5 | 195 | nein | 130 | 167 | 0 | 8,9 | 178 | 0 | 7,6 | 185 | 0 | 7,4 |
| 6 | 195 | nein | 108 | 170 | 1 | 9,0 | 185 | 1 | 5,3 | 195 | 0-1 | 7,9 |
| 7 | 195 | nein | 122 | 168 | 0 | 8,7 | 188 | 0 | 8,1 | 200 | 0 | 7,8 |
| 8 | 195 | nein | 120 | 160 | 0 | 7,5 | 170 | 0 | 7,8 | 175 | 0 | 8,0 |
| 9 | 195 | nein | 115 | 160 | 0 | 8,1 | 190 | 0 | 7,5 | 195 | 0 | 7,0 |
| 10 | 195 | nein | 120 | 180 | 0 | 8,0 | 190 | 0 | 7,5 | 195 | 0 | 7,0 |
| 11 | 195 | nein | 110 | 175 | 0-1 | 7,3 | 190 | 0 | 7,0 | 200 | 0 | 7,6 |
| 12 | 195 | nein | 90 | 150 | 0-1 | 8,3 | 176 | 1 | 7,8 | 195 | 0 | 6,8 |
| 13 | 244 | nein | 100 | 155 | 0-1 | 7,5 | 150 | 0-1 | 7,0 | 160 | 0 | 6,5 |
| 14 | 195 | nein | 105 | 170 | 0-1 | 9,8 | 200 | 0 | 10,0 | 205 | 0 | 9,0 |
| I | 188 | nein | 53 | 165 | 3 | 1,1 | 173 | 3 | <1 | 188 | 2 | 1,4 |
| Ia | 188 | ja | 95 | 160 | 2 | 9,0 | 170 | 2 | 8,8 | 175 | 1 | 7,9 |
| II | 188 | nein | 88 | 175 | 1 | <1 | 189 | 1 | <1 | 189 | 1 | 6,5 |
| IIa | 188 | ja | 116 | 162 | 1 | 8,0 | 167 | 1 | 6,5 | 174 | 2 | 7,5 |
| III | 195 | nein | 80 | 170 | 0 | <1 | 180 | 0-1 | <1 | 182 | 0 | 1,5 |
| IIIa | 195 | ja | 110 | 165 | 0 | 7,0 | 168 | 0-1 | 6,5 | 175 | 0 | 6,3 |
| V | 195 | nein | 72 | 155 | 0-1 | <1 | 161 | 1 | <1 | 165 | 0-1 | 2,2 |
| Va | 195 | ja | 100 | 162 | 0 | 7,2 | 153 | 0-1 | 6,0 | 167 | 0 | 5,8 |
| VI | 235 | nein | 105 | 192 | 1 | <1 | 195 | 1 | <1 | 209 | 1 | <1 |
| VIa | 235 | ja | 135 | 190 | 1 | <1 | 200 | 1 | <1 | 203 | 1 | <1 |
| VII | 195 | nein | 60 | 155 | 3 | 1,5 | 135 | 3-4 | 5,0 | 170 | 3 | 6,0 |
| VIIa | 195 | ja | 102 | 160 | 2 | 5,3 | 158 | 2-3 | 6,5 | 177 | 1 | 4,8 |

PH: Pendelhärte nach König (sec) gemäss DIN 53 157
KF: Kratzfestigkeit, Benotung 0-5 gemäss DIN 53 230
ET: Erichsentiefung (mm) gemäss DIN 53 156

Wie aus Tabelle 3 hervorgeht, zeigen die erfindungsgemäss hergestellten Klarlackfilme ohne Verwendung von Katalysator gleichzeitig rasche Härtung, hohe Endhärte, Kratzfestigkeit und Elastizität sowohl bei Raumtemperaturtrocknung als auch bei forcierter Trocknung. Die entsprechend aus Polyacrylatharzen gemäss Stand der Technik und dem o.g. isocyanuratgruppenhaltigen Polyisocyanat erhaltenen Filme zeigen — wie in den Vergleichsbeispielen dargelegt — auch bei Einsatz hoher Katalysatormengen ein weit weniger günstiges Eigenschaftsspektrum als die erfindungsgemässen Überzüge.

2. *Prüfung der pigmentierten Zweikomponenten-Reaktionslacke*
(entsprechen Beispielen 1 bis 14 und Vergleichsbeispielen I bis VII)

500 Teile der Copolymerisatlösungen mit Festkörpergehalten von 62 bis 63% für die Beispiele 1 bis 14 und Vergleichsbeispiele III bis V sowie VII, von ca. 60% für die Vergleichsbeispiele I und II und von ca. 50% für das Vergleichsbeispiel VI wurden mit 440 Teilen Titandioxid (Rutil) und 150 Teilen eines Lösungsmittelgemisches von n-Butylacetat/Xylol/Ethylglykolacetat 4 : 4 : 2 zu einem Lack angerieben. Zu dem pigmentierten Lackansatz wurden jeweils die in Tabelle 4, Spalte 2, angegebenen stöchiometrischen Mengen der 70%igen Polyisocyanatlösung (in Ethylglykolacetat/Xylol 1 : 1, NCO-Gehalt ca. 12%) zugegeben und die erhaltenen Lacke mit dem oben angegebenen Lösungsmittelgemisch auf Spritzviskosität (Auslaufzeit 20 sec, DIN-Becher 4 bei 23°C) verdünnt. Bei den Vergleichsbeispielen wurde zusätzlich noch je eine Formulierung unter Zugabe eines Katalysatorgemisches aus 30 Teilen 1%iger Lösung von Dibutylzinndilaurat (entsprechend 0,07% fest auf Bindemittel) und 46 Teilen 4%iger Lösung

von Calciumoctoat in n-Butylacetat (entsprechend 0,43% fest auf Bindemittel) hergestellt. Die Lacke wurden anschliessend mit einer Trockenschichtdicke von ca. 50 µm auf Stahlbleche aufgespritzt. Die lackierten Bleche wurden 30 Minuten bei Raumtemperatur abgelüftet und anschliessend 60 Minuten bei 80°C im Umluftofen, ausserdem 7 Tage bei Raumtemperatur getrocknet. Es wurde jeweils die Pendelhärte nach König gemäss DIN 53 157, die Kratzfestigkeit gemäss DIN 53 230, die Erichsentiefung nach DIN 53 156 sowie die Superbenzinfestigkeit (jeweils nach Trocknung von 60 Minuten bei 80°C, und nach 4 Tagen Raumtemperaturtrocknung) der gehärteten Lackfilme, ausserdem das pot life der fertigen Lackmischungen geprüft, wobei hierunter die Zeit bis zur Gelierung der auf Spritzviskosität eingestellten Lösungen bei 23°C verstanden wird.

Zur Prüfung der Superbenzinfestigkeit lässt man einen mit Superbenzin getränkten Wattebausch 5 Minuten auf den gehärteten Lackfilm einwirken, wobei die Watte während dieser Zeit mit einem Glasschälchen abgedeckt wird. Nach Entfernen des Wattebauschs wird 35 Minuten abgelüftet und anschliessend bewertet (Benotung 0 bis 5 entsprechend DIN 53 230).

Die Prüfergebnisse sind in Tabelle 4 zusammengefasst. Die pigmentierten Lacke der Beispiele 1 bis 14 und der Vergleichsbeispiele I bis VII ergeben hochglänzende glatte Lackschichten. Aus Tabelle 4 geht eindeutig hervor, dass die erfindungsgemässen Lackmischungen ohne Katalysatorzugabe sehr rasch zu harten, kratzfesten Filmen hoher Elastizität und hervorragender Superbenzinbeständigkeit aushärten und gleichzeitig verarbeitungsgerechte Topfzeiten ergeben. Die Vergleichsbeispiele I bis IV und VI ergeben dagegen unkatalysiert zwar ebenso harte, teilweise kratzfeste, andererseits viel zu spröde Lackschichten erheblich geringerer Superbenzinfestigkeit, während die Vergleichsbeispiele V und VII zu recht weichen und wenig kratzfesten Lackfilmen führen. Bei Zugabe grosser Katalysatormengen erhält man zwar zum Teil deutlich elastischere Schichten bei gleicher Härte und guter Kratzfestigkeit, jedoch liegen sowohl die Elastizität als auch die Benzinbeständigkeit der Filme immer noch wesentlich unter dem Niveau der erfindungsgemässen Überzüge. Ausserdem zeigen die katalysierten Lackmischungen deutlich kürzere Topfzeiten als die erfindungsgemässen katalysatorfreien Einstellungen.

Tabelle 4

| Beispiel/ Vergleichs- beispiel Nr. | Menge Polyiso- cyanat 70%ig (Teile) | katalysiert ja/nein | Eigenschaften der Weisslackfilme | | | | | | | | |
|---|---|---|---|---|---|---|---|---|---|---|---|
| | | | | Härtung 60 min bei 80°C | | | | Härtung bei Raumtemperatur 7 Tage | | | |
| | | | pot life* (h) | PH (sec) | KF | ET (mm) | BF | PH (sec) | KF | ET (mm) | BF (n. 4 Tagen) |
| 1 | 146 | nein | 28 | 143 | 1 | 6,5 | 0 | 100 | 1 | 9,6 | 0 |
| 2 | 156 | nein | 22 | 133 | 0 | 8,3 | 0 | 105 | 0-1 | 8,5 | 0 |
| 3 | 195 | nein | 25 | 150 | 0 | 8,0 | 0 | 135 | 0 | 7,0 | 0 |
| 4 | 195 | nein | 21 | 155 | 0 | 6,4 | 0-1 | 130 | 0 | 7,2 | 0-1 |
| 5 | 195 | nein | 22 | 140 | 0 | 7,5 | 0-1 | 125 | 0 | 7,0 | 0 |
| 6 | 195 | nein | 30 | 150 | 1 | 5,5 | 0 | 120 | 1 | 8,7 | 0 |
| 7 | 195 | nein | 23 | 148 | 0 | 7,0 | 0,1 | 130 | 0 | 7,5 | 0 |
| 8 | 195 | nein | 22 | 143 | 0 | 7,8 | 0 | 128 | 0 | 7,5 | 0 |
| 9 | 195 | nein | 30 | 145 | 0-1 | 7,5 | 0-1 | 132 | 0 | 6,8 | 0-1 |
| 10 | 195 | nein | 24 | 152 | 0 | 6,0 | 0 | 125 | 0-1 | 8,6 | 0 |
| 11 | 195 | nein | 25 | 160 | 0 | 5,9 | 0 | 118 | 0-1 | 8,5 | 0 |
| 12 | 195 | nein | 35 | 140 | 0 | 8,4 | 1 | 120 | 0 | 7,5 | 0-1 |
| 13 | 244 | nein | 21 | 162 | 0 | 6,8 | 1 | 115 | 0-1 | 8,6 | 1 |
| 14 | 195 | nein | 25 | 155 | 0 | 8,2 | 0-1 | 135 | 0 | 9,0 | 0 |
| I | 188 | nein | 47 | 128 | 2 | <1 | 2-3 | 116 | 2 | 3,5 | 3 |
| Ia | 188 | ja | 12 | 145 | 1 | 4,2 | 2 | 130 | 1-2 | 4,9 | 2-3 |
| II | 188 | nein | 45 | 139 | 1 | <1 | 1-2 | 135 | 1 | <1 | 2 |
| IIa | 188 | ja | 10 | 140 | 1 | <1 | 1 | 133 | 1 | <1 | 1-2 |
| III | 195 | nein | 43 | 135 | 2 | 1,0 | 3-4 | 120 | 2 | 2,5 | 3 |
| IIIa | 195 | ja | 13 | 140 | 0-1 | 2,5 | 2-3 | 130 | 1 | 4,0 | 2 |

Tabelle 4 (Fortsetzung)

| Beispiel/ Vergleichs-beispiel Nr. | Menge Polyiso-cyanat 70%ig (Teile) | katalysiert ja/nein | Eigenschaften der Weisslackfilme | | | | | | | | |
|---|---|---|---|---|---|---|---|---|---|---|---|
| | | | | Härtung 60 min bei 80°C | | | | Härtung bei Raumtemperatur 7 Tage | | | |
| | | | pot life* (h) | PH (sec) | KF | ET (mm) | BF | PH (sec) | KF | ET (mm) | BF (n. 4 Tagen) |
| IV | 195 | nein | 50 | 130 | 1-2 | 1,2 | 3 | 125 | 2 | 2,8 | 2-3 |
| IVa | 195 | ja | 14 | 136 | 1 | 3,0 | 2 | 120 | 1 | 4,5 | 2 |
| V | 195 | nein | 25 | 100 | 2-3 | 8,0 | 3 | 90 | 3 | 9,0 | 2 |
| VI | 235 | nein | 55 | 170 | 1 | <1 | 1 | 150 | 1 | <1 | 2-3 |
| VIa | 235 | ja | 18 | 180 | 0-1 | <1 | 0-1 | 155 | 0 | <1 | 2 |
| VII | 195 | nein | 80 | 110 | 2-3 | 10,5 | 4 | 105 | 2-3 | 10,0 | 4 |
| VIIa | 195 | ja | 17 | 132 | 1-2 | 5,2 | 2-3 | 135 | 1 | 6,0 | 3 |

PH: Pendelhärte nach König (sec) gemäss DIN 53 157
KF: Kratzfestigkeit, Benotung 0-5 gemäss DIN 53 230
ET: Erichsentiefung (mm) gemäss DIN 53 156
BF: Superbenzinfestigkeit
* Zeit in Stunden bis zur Gelierung der auf Spritzviskosität eingestellten Lackmischungen

**Patentanspüche**

1. Verfahren zur Herstellung von Überzügen auf der Basis von Umsetzungsprodukten von

(A) Polyhydroxypolyacrylatharzen aus Estern der Acrylsäure und/oder Methacrylsäure mit monofunktionellen aliphatischen Alkoholen, Monoestern der Acrylsäure und/oder Methacrylsäure mit polyfunktionellen aliphatischen Alkoholen und anderen copolymerisierbaren olefinisch ungesättigten Monomeren mit

(B) gegebenenfalls teilweise oder vollständig mit CH-, NH- oder OH-aciden Blockierungsmitteln verkappten, Isocyanuratgruppen aufweisenden Polyisocyanaten einer Funktionalität zwischen 2,5 und 6,

dadurch gekennzeichnet, dass man als Polyhydroxypolyacrylatharze (A) hydroxylgruppenhaltige Copolymerisate aus

a) 6 bis 70 Gew.-% mindestens eines Esters der allgemeinen Formel

```
            R
            |
HO-R'-O-C-C=CH2
        ||
        O
```

wobei
R für Wasserstoff oder eine Methylgruppe,
R' für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen und die Gruppierungen HO-R'- gegebenenfalls teilweise oder vollständig durch die Gruppierung Z-O-R'- ersetzt sein kann, worin Z für einen Rest der allgemeinen Formel

```
HO-[-R''-C-O-]n
         ||
         O
```

steht, worin n für eine ganze Zahl von 1 bis 3 steht und R'' eine 4 bis 8 Kohlenstoffatome enthaltende Alkylenkette bedeutet, welche gegebenenfalls zusätzlich 1 bis 3 Alkylsubstituenten mit insgesamt nicht mehr als 10 Kohlenstoffatomen und/oder einen cycloaliphatischen Rest mit 6 bis 10 Kohlenstoffatomen und/oder einen, gegebenenfalls alkylsubstituierten, aromatischen Rest mit 6 bis 8 Kohlenstoffatomen und/oder einen araliphatischen Rest mit 7 bis 9 Kohlenstoffatomen und/oder einen 1 bis 8 Kohlenstoffatome enthaltenden Alkoxyrest aufweist,

b) 0 bis 40 Gew.-% eines oder mehrerer Hydroxyalkylester der Acrylsäure und/oder Methacrylsäure der allgemeinen Formel

```
                                R
                                |
R'''-C-O-CH2-CH-CH2-O-C-C=CH2
     ||         |       ||
     O          OH      O
```

wobei
R für Wasserstoff oder eine Methylgruppe,
R''' für den Alkylrest einer verzweigten aliphatischen Carbonsäure mit 4 bis 26 C-Atomen stehen,

c) 10 bis 50 Gew.-% mindestens eines Alkylesters der Acrylsäure und/oder Methacrylsäure, der Homopolymerisate mit Glasübergangstemperaturen von +5°C bis +120°C bildet,

d) 0 bis 10 Gew.-% eines Vinylaromaten,

e) 10 bis 60 Gew.-% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von —80°C bis +4,5°C bildet,

f) 0 bis 10 Gew.-% eines Amides der Acrylsäure und/oder Methacrylsäure, das gegebenenfalls am

Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

g) 1 bis 25 Gew.-% mindestens einer polymerisierbaren, olefinisch ungesättigten, heterocyclischen Verbindung der allgemeinen Formeln (I) bis (VIII)

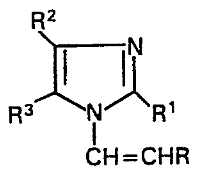

(I)

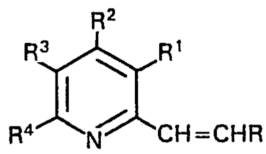

(II)

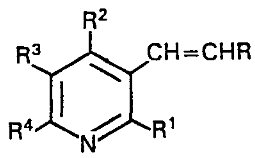

(III)

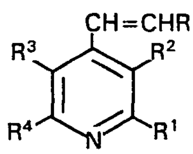

(IV)

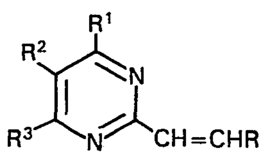

(V)

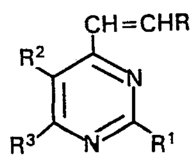

(VI)

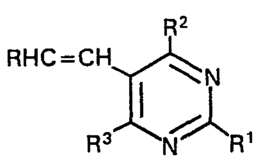

(VII)

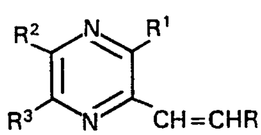

(VIII)

wobei

R für Wasserstoff oder eine Methylgruppe steht,

$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, durch Halogen oder eine Nitrogruppe substituierten Phenylrest, eine Gruppe der allgemeinen Formel $-R^{I}-A-R^{II}$

worin

A Sauerstoff oder Schwefel

$R^{I}$ eine Methylen-, Ethylen- oder gegebenenfalls durch eine Alkylgruppe mit 1 bis 4 C-Atomen, durch Halogen oder eine Nitrogruppe substituierte Phenylengruppe und

$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten,

eine Halogen- oder Nitrogruppe, sowie eine Gruppe der allgemeinen Formeln $-OR^{III}$, $-COOR^{III}$, $-SO_2R^{III}$, $-CONR^{III}R^{IV}$ oder $-SO_2NR^{III}R^{IV}$,

worin

$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen

und ausserdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,

h) 0 bis 20 Gew.-% unter (a) bis (g) nicht genannter Monomerer, deren einpolymerisierte Reste gegenüber Isocyanatgruppen inert sind,

mit der Massgabe, dass die Summe der unter (a) und (b) genannten Prozentzahlen 6 bis 70, die Summe der unter (c), (d) und (g) genannten Prozentzahlen 11 bis 60 und die Summe der Prozentzahlen der unter (a) bis (h) genannten Komponenten 100 beträgt,

und als Isocyanuratgruppen aufweisende Polyisocyanate (B) einer Funktionalität zwischen 2,5 und 6 solche mit vorwiegend cycloaliphatisch gebundenen Isocyanatgruppen einsetzt.

2. Verfahren nach Anspruch 1, dadurch gekennzeichnet, dass das hydroxylgruppenhaltige Copolymerisat (A) die Komponente (b) in einer Menge von 0 bis 50 Gew.-% einpolymerisiert enthält.

3. Verfahren gemäss Anspruch 1 oder 2, dadurch gekennzeichnet, dass man als cycloaliphatische isocyanuratgruppenhaltiges Polyisocyanat (B) ein aus 3-Isocyanatomethyl-3,5,5-trimethyl-cyclohexylisocyanat als monomerem Diisocyanat erhaltenes Produkt verwendet.

4. Verfahren nach einem der vorhergehenden Ansprüche, dadurch gekennzeichnet, dass die Hydroxylzahlen der hydroxylgruppenhaltigen Copolymerisate (A) zwischen 30 und 250 liegen.

5. Verfahren nach einem der vorhergehenden Ansprüche, dadurch gekennzeichnet, dass die Hydroxylzahlen der hydroxylgruppenhaltigen Copolymerisate (A) zwischen 50 und 150 liegen.

6. Verfahren nach einem der vorhergehenden Ansprüche, dadurch gekennzeichnet, dass als Komponente (a) des hydroxylgruppenhaltigen Copolymerisates Hydroxyethylacrylat und/oder -methacrylat eingesetzt werden.

7. Verfahren nach einem der vorhergehenden Ansprüche, dadurch gekennzeichnet, dass als Komponente (a) des hydroxylgruppenhaltigen Copolymerisates Butandiol-1,4- und/oder Hexandiol-1,6-monoacrylat und/oder -monomethacrylat eingesetzt werden.

8. Verfahren nach einem der vorhergehenden Ansprüche, dadurch gekennzeichnet, dass als Komponente (a) des hydroxylgruppenhaltigen Copolymerisates die Umsetzungsprodukte von Hydroxyethylacrylat und/oder -methacrylat und/oder 2-Hydroxypropylacrylat und/oder -methacrylat und/oder Butandiol-1,4- und/oder Hexandiol-1,6-monoacrylat und/oder -monomethacrylat mit gegebenenfalls durch 1 bis 3 Alkylreste mit insgesamt nicht mehr als 10 C-Atomen substituiertem ε-Caprolacton im Molverhältnis von 1,5 : 1 bis 1 : 3 eingesetzt werden.

9. Verfahren nach Anspruch 8, dadurch gekennzeichnet, dass als Komponente (a) des hydroxylgruppenhaltigen Copolymerisates die Umsetzungsprodukte von Hydroxyethylacrylat und/oder -methacrylat und/oder 2-Hydroxypropylacrylat und/oder -methacrylat und/oder Butandiol-1,4-monoacrylat und/oder -methacrylat mit ε-Caprolacton im Molverhältnis von 1,5 : 1 bis 1 : 3 eingesetzt werden.

10. Verfahren nach einem der vorhergehenden Ansprüche, dadurch gekennzeichnet, dass als Komponente (a) des hydroxylgruppenhaltigen Copolymerisates Mischungen aus 1 bis 99 Gew.-% der in Anspruch 9 genannten Umsetzungsprodukte mit 99 bis 1 Gew.-% Hydroxylethylacrylat und/oder -methacrylat und/oder Butandiol-1,4-monoacrylat und/oder -methacrylat eingesetzt werden.

11. Verfahren nach einem der vorhergehenden Ansprüche, dadurch gekennzeichnet, dass als Komponente (g) des hydroxylgruppenhaltigen Copolymerisates mindestens ein N-Vinylimidazol der Formel (Ia)

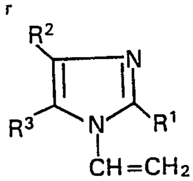

(Ia)

wobei $R^1$, $R^2$ und $R^3$ jeweils für Wasserstoff, eine Methyl- und Ethylgruppe, einen gerad- oder verzweigtkettigen Alkylrest mit 3 bis 4 C-Atomen und einen gegebenenfalls durch eine Alkylgruppe mit 1 bis 4 C-Atomen, durch Halogen oder eine Nitrogruppe substituierten Phenylrest stehen und ausserdem $R^2$ und $R^3$ gemeinsam mit dem Heterocyclus einen anellierten gegebenenfalls durch eine Alkylgruppe mit 1 bis 4 C-Atomen, durch Halogen oder eine Nitrogruppe substituierten aromatischen Sechsring bilden können, eingesetzt wird.

12. Verfahren nach Anspruch 11, dadurch gekennzeichnet, dass für das hydroxylgruppenhaltige Copolymerisat 2 bis 20 Gew.-% der Komponente (g) eingesetzt werden.

13. Verfahren nach einem der Ansprüche 1 bis 10, dadurch gekennzeichnet, dass als Komponente (g) des hydroxylgruppenhaltigen Copolymerisats mindestens eine Vinylverbindung der allgemeinen Formeln

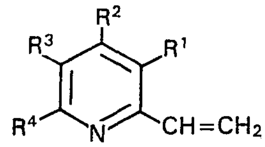

(IIa)

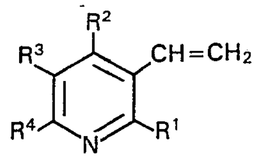

(IIIa)

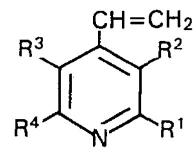

(IVa)

wobei $R^1$, $R^2$, $R^3$ und $R^4$ jeweils die gleiche Bedeutung wie $R^1$, $R^2$ und $R^3$ in der Formel (Ia) des Anspruchs 11 haben und ausserdem jeweils $R^3$ und $R^4$ oder $R^2$ und $R^3$ in den Formeln (IIa) und (IIIa) oder $R^1$ und $R^2$ sowie $R^3$ und $R^4$ gleichzeitig in Formel (IVa) gemeinsam mit dem Heterocyclus einen anellierten gegebenenfalls durch eine Alkylgruppe mit 1 bis 4 C-Atomen, durch Halogen oder eine Nitrogruppe substituierten aromatischen Sechsring bilden können, eingesetzt wird.

14. Verfahren nach Anspruch 13, dadurch gekennzeichnet, dass als Komponente (g) des hydroxylgruppenhaltigen Copolymerisates 4-Vinylpyridin eingesetzt wird.

15. Verfahren nach Anspruch 13 oder 14, dadurch gekennzeichnet, dass für das hydroxylgruppenhaltige Copolymerisat 2 bis 20 Gew.-% der Komponente (g) eingesetzt werden.

16. Verfahren nach einem der vorhergehenden Ansprüche, dadurch gekennzeichnet, dass man die Mengenverhältnisse der Reaktionskomponenten (A) und (B) so wählt, dass das Äquivalentverhältnis von gegebenenfalls teilweise oder vollständig mit CH-, NH- oder OH-aciden Blockierungsmitteln verkappten Isocyanatgruppen zu reaktionsfähigen Hydroxylgruppen zwischen 0,25 : 1 und 4 : 1 liegt.

17. Verfahren nach einem der vorhergehenden Ansprüche, dadurch gekennzeichnet, dass als Blockierungsmittel für das gegebenenfalls teilweise oder vollständig verkappte Polyisocyanat ein monofunktionelles Ketoxim eingesetzt wird.

18. Verfahren nach einem der vorhergehenden Ansprüche, dadurch gekennzeichnet, dass als Blockierungsmittel für das Polyisocyanat Dimethylketoxim oder Methylethylketoxim verwendet wird.

**Claims**

1. A process for the production of a coating based on a reaction product of

(A) a polyhydroxy polyacrylate resin comprising esters of acrylic acid or methacrylic acid with monofunctional aliphatic alcohols, monoesters of acrylic acid or methacrylic acid with polyfunctional aliphatic alcohols and other copolymerizable olefinically unsaturated monomers, with

(B) isocyanurate-containing polyisocyanates which have a functionality of from 2.5 to 6 and which may be partially or completely blocked with CH-, NH- or OH-acidic blocking agents,

wherein the polyhydroxy polyacrylate resin (A) used is a hydroxyl-containing copolymer comprising

a) from 6 to 70% by weight of one or more esters of the general formula

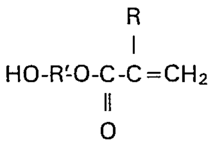

where

R is hydrogen or methyl,

R' is straight-chain or branched alkylene of 2 to 18 carbon atoms or an alkylene radical of 7 to 17 carbon atoms which contains up to three cycloaliphatic groups,
and, if desired, some or all of the groups HO-R'- can be replaced by the group Z-O-R'-, where Z is a radical of the general formula

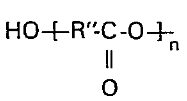

where n is an integer from 1 to 3 and R'' is an alkylene chain of 4 to 8 carbon atoms which may additionally contain from 1 to 3 alkyl substituents having a total of not more than 10 carbon atoms and/or a cycloaliphatic radical of 6 to 10 carbon atoms and/or an unsubstituted or alkyl-substituted aromatic radical of 6 to 8 carbon atoms and/or an araliphatic radical of 7 to 9 carbon atoms and/or an alkoxy radical of 1 to 8 carbon atoms,

b) from 0 to 40% by weight of one or more hydroxyalkyl esters of acrylic acid and/or methacrylic acid of the general formula

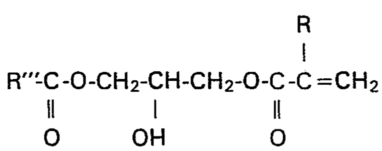

where

R is hydrogen or methyl, and

R''' is an alkyl radical of a branched aliphatic carboxylic acid of 4 to 26 carbon atoms,

c) from 10 to 50% by weight of one or more alkyl acrylates and/or methacrylates which form homopolymers having glass transition temperatures of from +5°C to +120°C,

d) from 0 to 10% by weight of a vinyl-aromatic,

e) from 10 to 60% by weight of one or more alkyl esters, and/or alkylglycol esters containing up to 2 etheroxygen bridges, of acrylic acid and/or methacrylic acid, which esters form homopolymers having glass transition temperatures of from —80°C to +4.5°C,

f) from 0 to 10% by weight of an acrylamide and/or methacrylamide which may or may not be substituted at the amide nitrogen by one or two alkyl radicals of 1 to 8 carbon atoms, which may contain a carbonyl group, or by one or two phenyl radicals,

g) from 1 to 25% by weight of one or more polymerizable, olefinically unsaturated, heterocyclic compounds of the general formulae (I) to (VIII)

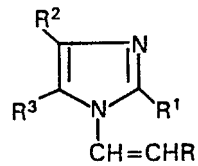

(I)

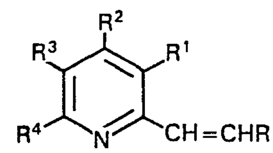

(II)

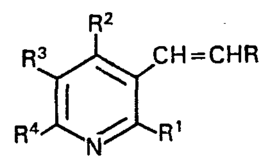

(III)

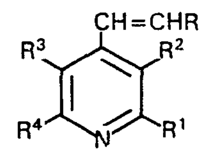

(IV)

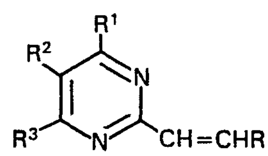

(V)

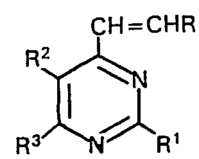

(VI)

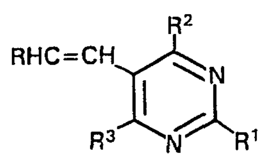

(VII)

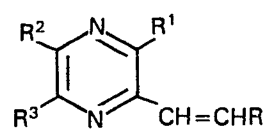

(VIII)

where

R is hydrogen or methyl, and

$R^1$, $R^2$, $R^3$ and $R^4$ are identical or different and are each hydrogen, methyl, ethyl, straight-chain or branched alkyl of 3 or 4 carbon atoms, phenyl which is unsubstituted or substituted by alkyl of 1 to 4 carbon atoms halogen or nitro, a group of the general formula $-R^I-A-R^{II}$,

where

A is oxygen or sulfur,

$R^I$ is methylene or ethylene or is phenylene which is unsubstituted or substituted by alkyl of 1 to 4 carbon atoms, halogen or nitro, and

$R^{II}$ is methyl or ethyl or is phenyl which is unsubstituted or substituted by alkyl of 1 to 4 carbon atoms, halogen or nitro, or $R^1$, $R^2$, $R^3$ and $R^4$ are each halogen nitro or a group of the general

formula $-OR^{III}$, $-COOR^{III}$, $-SO_2R^{III}$, $-CONR^{III}R^{IV}$ or $-SO_2NR^{III}R^{IV}$,

where

$R^{III}$ and $R^{IV}$ are identical or different and are each methyl, ethyl, a straight-chain or branched alkyl radical of 3 or 4 carbon atoms or phenyl which is unsubstituted or substituted by alkyl of 1 to 4 carbon atoms, halogen or nitro,
and furthermore, $R^2$ and $R^3$ in formulae (I), (II), (III), (V), (VI) and (VIII) or $R^3$ and $R^4$ in formula (III), and either $R^3$ and $R^4$ or $R^1$ and $R^2$ or both $R^3$ and $R^4$ and $R^1$ and $R^2$ in formulae (II) and (IV), together with the heterocycle, can form a fused six-membered aromatic ring which is unsubstituted or substituted by alkyl of 1 to 4 carbon atoms, halogen or nitro, and

h) from 0 to 20% by weight of monomers which are not mentioned under (a) to (g) and whose copolymerized radicals are inert to isocyanate groups,

with the proviso that the sum of the percentages specified under (a) and (b) is from 6 to 70, the sum of the percentages specified under (c), (d) and (g) is from 11 to 60 and the sum of the percentages of the components specified under (a) to (h) is 100,

and the isocyanurate-containing polyisocyanate (B) with a functionality of from 2.5 to 6 is one which predominantly contains cycloaliphatically bonded isocyanate groups.

2. A process as claimed in claim 1, wherein the hydroxy-containing copolymer (A) contains component (b) as copolymerized units in an amount of from 0 to 50% by weight.

3. A process as claimed in claim 1 or 2, wherein the cycloaliphatic isocyanurate-containing polyisocyanate (B) used is a product obtained from 3-isocyanatomethyl-3,5,5-trimethylcyclohexyl isocyanate as the monomeric diisocyanate.

4. A process as claimed in any of the preceding claims, wherein the hydroxyl number of the hydroxyl-containing copolymer (A) is from 30 to 250.

5. A process as claimed in any of the preceding claims, wherein the hydroxyl number of the hydroxyl-containing copolymer (A) is from 50 to 150.

6. A process as claimed in any of the preceding claims, wherein hydroxyethyl acrylate or methacrylate is used as component (a) of the hydroxyl-containing copolymer.

7. A process as claimed in any of the preceding claims, wherein butane-1,4-diol monoacrylate and/or hexane-1,6-diol monoacrylate and/or butane-1,4-diol monomethacrylate and/or hexane-1,6-diol monomethacrylate is used as component (a) of the hydroxyl-containing copolymer.

8. A process as claimed in any of the preceding claims, wherein a reaction product of hydroxyethyl acrylate and/or methacrylate and/or 2-hydroxypropyl acrylate and/or methacrylate and/or butane-1,4-diol monoacrylate and/or hexane-1,6-diol monoacrylate and/or butane-1,4-diol monomethacrylate and/or hexane-1,6-diol monomethacrylate with ε-caprolactone which is unsubstituted or substituted by 1, 2 or 3 alkyl radicals having a total of not more than 10 carbon atoms, in a molar ratio of 1.5 : 1 to 1 : 3, is used as component (a) of the hydroxyl-containing copolymer.

9. A process as claimed in claim 8, wherein a reaction product of hydroxyethyl acrylate and/or methacrylate and/or 2-hydroxypropyl acrylate and/or methacrylate and/or butane-1,4-diol monoacrylate and/or methacrylate with ε-caprolactone in a molar ratio of from 1.5 : 1 to 1 : 3 is used as component (a) of the hydroxyl-containing copolymer.

10. A process as claimed in any of the preceding claims, wherein in a mixture comprising from 1 to 99% by weight of a reaction product mentioned in claim 9 with from 99 to 1% by weight of hydroxyethyl acrylate and/or methacrylate and/or butane-1,4-diol monoacrylate and/or methacrylate is used as component (a) of the hydroxyl-containing copolymer.

11. A process as claimed in any of the preceding claims, wherein in one or more N-Vinylimidazoles of the formula (Ia)

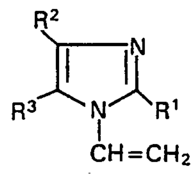

(Ia)

where $R^1$, $R^2$ and $R^3$ are each hydrogen, methyl, ethyl, a straight-chain or branched alkyl radical of 3 or 4 carbon atoms or phenyl which is unsubstituted or substituted by alkyl of 1 to 4 carbon atoms, halogen or nitro, and furthermore $R^2$ and $R^3$, together with the heterocycle, can form a fused six-membered aromatic ring which is unsubstituted or substituted by alkyl of 1 to 4 carbon atoms, halogen or nitro, are used as component (g) of the hydroxyl-containing copolymer.

12. A process as claimed in claim 11, wherein from 2 to 20% by weight of component (g) is employed for the hydroxyl-containing copolymer.

13. A process as claimed in claims 1 to 10, wherein in one or more vinyl compounds of the general formulae

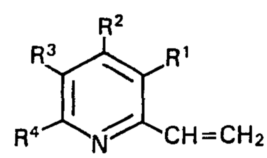

(IIa)

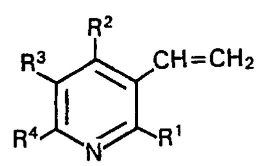

(IIIa)

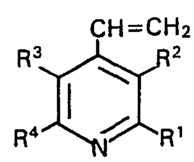

(IVa)

where $R^1$, $R^2$, $R^3$ and $R^4$ have the same meanings as $R^1$, $R^2$ and $R^3$ in formula (Ia) of claim 11 and furthermore $R^3$ and $R^4$ or $R^2$ in formulae (IIa) and (IIIa) or both $R^1$ and $R^2$ and $R^4$ in formula (IVa), together with the heterocycle, can form a fused six-membered

aromatic ring which is unsubstituted or substituted by alkyl of 1 to 4 carbon atoms, halogen or nitro, are used as component (g) of the hydroxyl-containing copolymer.

14. A process as claimed in claim 13, wherein 4-vinylpyridine is used as component (G) of the hydroxyl-containing copolymer.

15 A process as claimed in claim 13 or 14, wherein from 2 to 20% by weight to of component (g) is employed for the hydroxyl-containing copolymer.

16. A process as claimed in any of the preceding claims, wherein the relative proportions of components (A) and (B) are so chosen that the ratio of the number of equivalents of isocyanate groups which may be partially or completely blocked with CH-, NH- or OH-acidic blocking agents to the number of equivalents of reactive hydroxyl groups is from 0.25 : 1 to 4 : 1.

17. A process as claimed in any of the preceding claims, wherein a monofunctional ketoxime is used as blocking agent for the polyisocyanate in which none, some or all of the groups are blocked.

18. A process as claimed in any of the preceding claims, wherein dimethyl ketoxime or methyl ethyl ketoxime is used as blocking agent for the polyisocyanate.

**Revendications**

1. Procédé de réalisation de revêtements à base de produits de la réaction

(A) de résines de polyhydroxypolyacrylates dérivées d'esters de l'acide acrylique et(ou) de l'acide méthacrylique et d'alcools aliphatiques monofunctionnels, de mono-esters de l'acide acrylique et(ou) de l'acide méthacrylique et d'alcools aliphatiques poly-fonctionnels, ainsi que d'autres monomères à insaturation oléfinique copolymérisables et

(B) de polyisocyanates contenant des groupes isocyanurate éventuellement partiellement ou complètement bloqués par des agents de blocage CH-, NH- ou OH-acides, d'une fonctionnalité comprise entre 2,5 et 6,

caractérisé en ce que l'on emploie comme résines de polyhydroxypolyacrylates (A) des copolymérisats à groupes hydroxyle composés de:

a) 6 à 70% d'au moins un ester de la formule générale

$$HO\text{-}R'\text{-}O\text{-}\underset{\underset{O}{\|}}{C}\text{-}\overset{\overset{R}{|}}{C}=CH_2$$

dans laquelle

R désigne un atome d'hydrogène ou un radical méthyle et

R' un groupe alkylène en $C_2$ à $C_{18}$ à chaîne droite ou ramifiée ou un groupe alkylène en $C_7$ à $C_{17}$, comprenant entre un et trois groupes cycloaliphatiques, et dans laquelle le groupement HO-R'- peut éventuellement être remplacé en partie ou totalement par un groupement Z-O-R'-, dans lequel Z représente un groupe de la formule générale

$$HO\text{+}R''\text{-}\underset{\underset{O}{\|}}{C}\text{-}O\text{+}_n$$

où n est un nombre entier valant de 1 à 3 et R'' désigne un pont alkylène en $C_4$ à $C_8$, pouvant éventuellement porter un à trois substituants alkyle, dont le nombre total des atomes de carbone n'est pas supérieur à dix et (ou) un groupe cycloaliphatique en $C_6$ à $C_{10}$ et(ou) un groupe aromatique en $C_6$ à $C_8$, éventuellement alkyl-substitué, et(ou) un groupe araliphatique en $C_7$ à $C_9$ et(ou) un groupe alcoxy en $C_1$ à $C_8$;

b) 0 à 40% en poids d'un ou de plusieurs esters hydroxy-alkyliques de l'acide acrylique et(ou) de l'acide méthacrylique de la formule générale

$$R'''\text{-}\underset{\underset{O}{\|}}{C}\text{-}O\text{-}CH_2\text{-}\underset{\underset{OH}{|}}{CH}\text{-}CH_2\text{-}O\text{-}\underset{\underset{O}{\|}}{C}\text{-}\overset{\overset{R}{|}}{C}=CH_2$$

dans laquelle

R désigne un atome d'hydrogène ou un radical méthyle et

R''' un radical alkyle dérivé d'un acide carboxylique aliphatique ramifié en $C_4$ à $C_{26}$;

c) 10 à 50% en poids d'au moins un ester alkylique de l'acide méthacrylique, capable de former des homo-polymérisats avec des températures de transition vitreuse comprises entre +5°C et 120°C;

d) 0 à 10% en poids d'un composé vinyl-aromatique;

e) 10 à 60% en poids d'au moins un ester alkylique et(ou) d'un ester d'alkyl-glykol de l'acide acrylique et(ou) de l'acide méthacrylique, ce dernier contenant un ou deux ponts oxygène d'une fonction éther, capable de former des homo-polymérisats avec des températures de transition vitreuse comprise entre —80°C et +4,5°C;

f) 0 à 10% en poids d'un amide acrylique et(ou) méthacrylique éventuellement substitué sur l'azote de la fonction amide par un ou deux radicaux alkyle en $C_1$ à $C_8$, comportant éventuellement un groupe carbonyle, ou par un ou deux groupes phényle;

g) 1 à 25% en poids d'au moins un composé hétérocyclique à insaturation oléfinique polymérisable des formules générales I à VIII

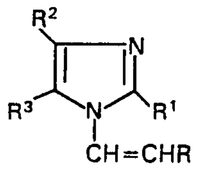

(I)

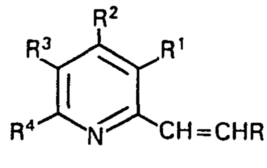

(II)

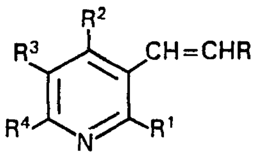

(III)

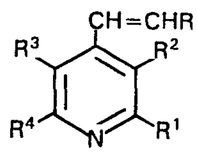

(IV)

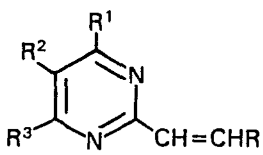

(V)

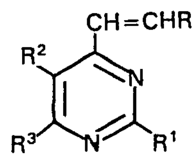

(VI)

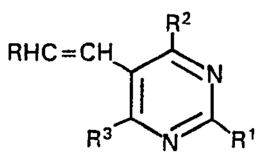

(VII)

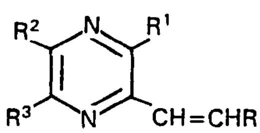

(VIII)

dans lesquelles

R désigne un atome d'hydrogène ou un radical méthyle

$R^1$, $R^2$, $R^3$ et $R^4$, qui peuvent être identiques ou différents l'un de l'autre, désignent chacun un atome d'hydrogène ou un radical méthyle ou éthyle ou un radical alkyle en $C_3$ ou $C_4$ à chaîne droite ou ramifiée ou un groupe phényle éventuellement alkyl (en $C_1$ à $C_4$)-, halo- ou nitro-substitué ou un groupe de la formule générale $-R^I-A-R^{II}$,

dans laquelle

A représente un atome d'oxygène ou de soufre,

$R^I$ un groupe méthylène ou éthylène ou un groupe phénylène éventuellement alkyl (en $C_1$ à $C_4$)-, halo- ou nitro-substitué et

$R^{II}$ un radical méthyle ou éthyle ou un groupe phényle éventuellement alkyl (en $C_1$ à $C_4$)-, halo- ou nitro-substitué,

un atome d'halogène ou un groupe nitro ou un groupe de l'une des formules générales $-OR^{III}$, $-COOR^{III}$, $-SO_2R^{III}$, $-CONR^{III}R^{IV}$ et $-SO_2NR^{III}R^{IV}$,

où

$R^{III}$et $R^{IV}$, qui peuvent être identiques ou différents, désignent chacun un radical méthyle ou éthyle ou un radical alkyle en $C_3$ ou $C_4$ à chaîne droite ou ramifiée ou un groupe phényle éventuellement alkyl (en $C_1$ à $C_4$)-, halo- ou nitro-substitué, étant entendu que $R^2$ et $R^3$ dans les formules I, II, III, V, VI et VIII, $R^3$ et $R^4$ dans la formule III, $R^3$ et $R^4$ ou $R^1$ et $R^2$ dans les formules II et IV et $R^3$ et $R^4$ et(ou) $R^1$ et $R^2$ dans les formules II et IV peuvent constituer avec le noyeau hétérocyclique un noyau aromatique hexagonal, éventuellement alkyl (en $C_1$ à $C_4$)-, halo- ou nitro-substitué, condensé;

h) 0 à 20% en poids de monomères non mentionnés sub a) à g), dont les restes copolymérisés sont inertes vis-à-vis des groupes isocyanate,

avec la condition que la somme des pourcentages de a) et de b) se situe entre 6 et 70, la somme des pourcentages de c), de d) et de g) se situe entre 11 et 60 et la somme des pourcentages des composants a) à h) soit égale à 100,

et comme polyisocyanates à groupes isocyanurate (B) d'une fonctionnalité comprise entre 2,5 et 6 des polyisocyanates avec une majorité de groupes isocyanate à liaison cycloaliphatique.

2. Procédé suivant la revendication 1, caractérisé en ce que le copolymérisat à groupes hydroxyle (A) contient une proportion de 0 à 50% en poids de la composante (b) copolymérisée.

3. Procédé suivant la revendication 1 ou 2, caractérisé en ce que le polyisocyanate cycloaliphatique à groupes isocyanurate (B) est un diisocyanate monomère dérivé de l'isocyanate de 3-isocyanatométhyl-3,5,5-triméthyl-cyclohexyle.

4. Procédé suivant l'une des revendications précédentes, caractérisé en ce que l'on utilise un copolymérisat à groupes hydroxyle (A) avec un indice d'hydroxyle compris entre 30 et 250.

5. Procédé suivant l'une des revendications précédentes, caractérisé en ce que l'on utilise un copolymérisat à groupes hydroxyle (A) avec un indice d'hydroxyle compris entre 50 et 150.

6. Procédé suivant l'une des revendications précédentes, caractérisé en ce que la composante (a) du copolymérisat à groupes hydroxyle est un hydroxyéthyl-acrylate et(ou) un hydroxyéthyl-méthacrylate.

7. Procédé suivant l'une des revendications précédentes, caractérisé en ce que la composante (a) du copolymérisat à groupes hydroxyle est du mono-acrylate et(ou) du mono-méthacrylate de butane-diol-1,4 et(ou) d'hexane-diol-1,6.

8. Procédé suivant l'une des revendications précédentes, caractérisé en ce que la composante (a) du copolymérisat à groupes hydroxyle est choisie parmi les produits de la réaction de l'acrylate et(ou) du méthacrylate d'hydroxyéthyle ou de l'acrylate et(ou) du méthacrylate de 2-hydroxypropyle ou du mono-acrylate et(ou) du mono-méthacrylate de butane-diol-1,4 et(ou) d'hexane-diol-1,6 et d'une ε-caprolactone éventuellement substituée par un à trois radicaux alkyle avec un total d'atomes de carbone ne dépassant pas 10, le rapport molaire étant compris entre 1,5 : 1 et 1 : 3.

9. Procédé suivant la revendication 8, caractérisé

en ce que la composante (a) du copolymérisat à groupes hydroxyle est choisie parmi les produits de la réaction de l'acrylate et(ou) du méthacrylate d'hydroxyéthyle ou de l'acrylate et(ou) du méthacrylate de 2-hydroxypropyle ou du mono-acrylate et(ou) du mono-méthacrylate de butane-diol-1,4 et d'une ε-capro-lactone dans un rapport molaire compris entre 1,5 : 1 et 1 : 3.

10. Procédé suivant l'une des revendications précédentes, caractérisé en ce que la composante (a) du copolymérisat à groupes hydroxyle est choisie parmi les mélanges de 1 à 99% en poids des produits réactionnels énumérés dans la revendication 9 et de 99 à 1% en poids d'acrylate et(ou) de méthacrylate d'hydroxyéthyle ou de mono-acrylate et(ou) de mono-méthacrylate de butane-diol-1,4.

11. Procédé suivant l'une des revendications précédentes, caractérisé en ce que la composante (g) du copolymérisat à groupes hydroxyle est choisie parmi les N-vinyl-imidazoles de la formule Ia

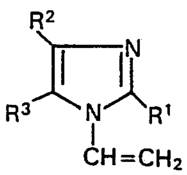

(Ia)

dans laquelle $R^1$, $R^2$ et $R^3$ désignent chacun un atome d'hydrogène ou un radical méthyle ou éthyle ou un radical alkyle en $C_3$ ou $C_4$ à chaîne droite ou ramifiée ou un groupe phényle éventuellement alkyl (en $C_1$ à $C_4$)-, halo- ou nitro-substitué ou $R^2$ et $R^3$ forment avec le noyau hétérocyclique un noyau aromatique hexagonal, éventuellement alkyl (en $C_1$ à $C_4$)-, halo- ou nitro-substitué, condensé.

12. Procédé suivant la revendication 11, caractérisé en ce que le copolymérisat à groupes hydroxyle renferme entre 2 et 20% en poids de la composante (g).

13. Procédé suivant l'une des revendications 1 à 10, caractérisé en ce que la composante (g) du copolymérisat à groupes hydroxyle est choisie parmi les composés vinyliques des formules générales

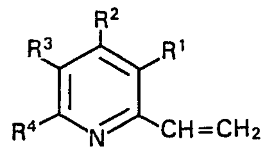

(IIa)

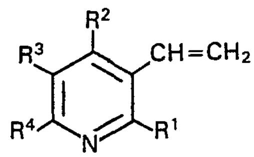

(IIIa)

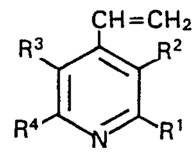

(IVa)

dans lesquelles, $R^1$, $R^2$, $R^3$ et $R^4$ possèdent les significations respectives des substituants $R^1$, $R^2$ et $R^3$ de la formule Ia de la revendication 11, $R^3$ et $R^4$ ou $R^2$ et $R^3$ des formules IIa et IIIa ou $R^1$ et $R^2$ et $R^3$ et $R^4$ de la formule IVa pouvant en outre constituer avec le noyau hétérocyclique un noyau aromatique hexagonal, éventuellement alkyl (en $C_1$ à $C_4$)-, halo- ou nitro-substitué, condensé.

14. Procédé suivant la revendication 13, caractérisé en ce que la composante (g) du copolymérisat à groupes hydroxyle est la 4-vinyl-pyridine.

15. Procédé suivant la revendication 13 ou 14, caractérisé en ce que le copolymérisat à groupes hydroxyle contient entre 2 et 20% en poids de la composante (g).

16. Procédé suivant l'une des revendications précédentes, caractérisé en ce que les proportions respectives des composantes réactionnelles (A) et (B) sont choisies de manière à réaliser un rapport des équivalents entre les groupes isocyanate éventuellement bloqués totalement ou en partie par des agents de blocage CH-, NH- ou OH-acides et les groupes hydroxyle réactifs compris entre 0,25 : 1 et 4 : 1.

17. Procédé suivant l'une des revendications précédentes, caractérisé en ce que l'agent de blocage pour le polyisocyanate totalement ou partiellement bloqué est une cét-oxime mono-functionnelle.

18. Procédé suivant l'une des revendications précédentes, caractérisé en ce que l'agent utilisé pour le blocage du polyisocyanate est la diméthyl- ou la méthyl-éthyl-cétoxime.